# EUROPEAN PATENT SPECIFICATION

(11) **EP 3 446 873 B1**
(45) Date of publication and mention of the grant of the patent: **07.07.2021**
(21) Application number: 18199139.9
(22) Date of filing: 09.01.2015
(51) Int. Cl.: B32B 33/00, B32B 3/30, B32B 27/00, E04F 15/16, B32B 19/02, B32B 3/26, B32B 27/08, B32B 27/32, B32B 38/06, E04F 15/10

(54) **DECORATIVE SHEET AND DECORATIVE PLATE, AND PROCESSES FOR PRODUCING SAME**
DEKORATIVER BOGEN UND DEKORATIVE PLATTE UND VERFAHREN ZUR HERSTELLUNG DAVON
FEUILLE DÉCORATIVE ET PLAQUE DÉCORATIVE ET PROCÉDÉS DE PRODUCTION ASSOCIÉS

(30) Priority: 10.01.2014 JP 2014003649; 10.01.2014 JP 2014003666; 25.09.2014 JP 2014195342; 25.09.2014 JP 2014195353
(43) Date of publication of application: 27.02.2019
(62) Divisional of application: 15735031.5
(73) Proprietor: DAI NIPPON PRINTING CO., LTD., Tokyo 162-8001 (JP)
(72) Inventor: OONO, Tatsuya, Tokyo 162-8001 (JP); HORIO, Yoshiaki, Tokyo 162-8001 (JP)
(74) Representative: Müller-Boré & Partner Patentanwälte PartG mbB

(56) References cited:
- JP-A- 2012 213 923
- JP-A- 2012 215 064
- JP-A- 2013 067 038
- JP-A- 2013 072 206
- US-A1- 2008 070 005

## Description

The present invention relates to a decorative sheet and a process for producing the same, as well as a decorative plate and a process for producing the same.

Designability is conventionally required for interior materials used for the interior of buildings, and decorative plates are used as such interior materials. In particular, the surfaces of decorative plates used for floor surfaces require both designability and scratch resistance.

In Western culture, walking with shoes on inside residences, etc., is common; therefore, low-pressure melamine floors are mainly used for room floors in Western countries, in consideration of scratch resistance. However, low-pressure melamine floors have drawbacks such that walking sounds are likely to reverberate, and that the texture thereof is hard and cold.

In recent years, floors (so-called hybrid floors) obtained by bonding decorative sheets of vinyl chloride resin to chipboards, typified by cork, which is generally used as an adherend, have been used in place of low-pressure melamine floors. Chipboards are base materials obtained by mechanically grinding lumber waste, bark, and small-diameter logs discarded in saw mills, building scrap wood discarded in demolition and construction sites, and the like, to form chips, and performing compression molding on the chips together with a synthetic resin adhesive to mold them into plates.

Due to the use of chipboards as adherends, such hybrid floors are excellent in that they are environmentally friendly, have sound insulation and heat insulation effects, and have a soft texture. Furthermore, when they are bonded to decorative sheets, productivity is improved by roll laminating, and color variation during installation is suppressed.

However, when a vinyl chloride-based decorative sheet is bonded to the above adherend, bonding finish is poor. It is thus necessary to use a backer layer comprising a hard vinyl chloride resin; however, bonding of a vinyl chloride-based decorative sheet using such a backer layer to an adherend is limited to sheet-fed bonding (that is, it is difficult to employ roll laminating to bond the vinyl chloride-based decorative sheet to an adherend). Therefore, the vinyl chloride-based decorative sheet has problematically low productivity. Further, the regulation of vinyl chloride-based resins has progressed in Europe, in consideration of environmental problems. To address these problems, there is a demand for decorative plates that do not use vinyl chloride-based resins.

In contrast, in Japan, for example, decorative plates in which a decorative sheet using an olefinic resin is bonded to an adherend are used as decorative plates that do not use vinyl chloride-based resins. However, when such a decorative sheet is bonded to an adherend, such as a chipboard, to form a decorative plates, surface unevenness of the chipboard appears on the surface of the decorative sheet, causing a problematic uneven surface of the decorative plate (unevenness appearing on the surface of the decorative sheet due to surface unevenness of the chipboard, etc., is referred to in Japanese as *"daku"*). Moreover, when the smoothness of the surface of the decorative plate is enhanced by a method to increase the thickness of the decorative sheet, the increased thickness of the decorative sheet reduces emboss-forming properties. Further, when the embossed shape is shallow, embossing collapse occurs when the decorative sheet is bonded to an adherend, causing problematic reduced designability. Furthermore, the increased thickness of the decorative sheet causes a problem such that curliness occurring when the decorative sheet is stored in a rolled state makes it difficult to perform roll laminating.

As the decorative sheet using an olefinic resin, a decorative sheet obtained by the following process is proposed. The process is for producing a decorative sheet for floor materials, having a base material sheet, and a picture pattern layer, a transparent adhesive layer, a transparent resin layer, and a transparent surface-protecting layer sequentially laminated on the base material sheet, and having a synthetic resin backer layer on the back surface of the base material sheet, wherein the transparent resin layer and the decorative sheet for floor materials have a specific thickness, the decorative sheet for floor materials is obtained by extrusion molding of a molten resin with a specific thickness on the back surface of the base material sheet of an intermediate sheet in which the picture pattern layer, the transparent adhesive layer, the transparent resin layer, and the transparent surface-protecting layer are formed on the base material sheet, thereby forming the synthetic resin backer layer, and at least one of the transparent resin layer and the synthetic resin backer layer contains a thermoplastic resin as a resin component (see, for example, PTL 1) .

Decorative plates using such decorative sheets are also excellent; however, they are not supposed to be used while walking with shoes on, and further scratch resistance is required. In particular, in recent years, construction is performed to unify the design of a room floor and the design of an outdoor wood deck to eliminate uneven steps, thereby making the entire room look wide. When the decorative plate is used as an interior material, sand brought from outside rubs the surface of the decorative plate due to walking, causing scratches due to low load (static pressure load) on the floor surface, and inducing gloss changes, such as gloss appearance. Therefore, such decorative plates are required to have static pressure load resistance.

Hence, there is a demand for development of decorative sheets that can be bonded to an adherend, such as a chipboard, to form a decorative plate that suppresses the appearance of unevenness of the adherend on the surface of the decorative plate, have excellent emboss-forming properties, suppress embossing collapse when bonded to an adherend, have excellent scratch resistance even under service conditions, such as walking with shoes on, thus suppressing gloss appearance, and have excellent curling resistance.

PTL 1: JP5045180B
PTL 2: JP2003-013587A
JP 2012 215064 A describes a floor decorative sheet and a floor decorative material.
JP 2013 067038 A describes a decorative sheet for floors and a method for manufacturing the same.
JP 2012 213923 A describes a decorative sheet and a decorative board.
US 2008/070005 A1 describes a decorative material having a pattern on a surface thereof and exhibiting a difference in gloss according to the pattern.
JP 2013 072206 A describes a decorative material for floors.

An object of the present invention is to provide a decorative sheet that can be used in Europe and other countries where the regulation of vinyl chloride-based resins has progressed, and that can be bonded to an adherend, such as a chipboard, to form a decorative plate that suppresses the appearance of unevenness of the adherend on the surface of the decorative plate.

Moreover, an object of the present invention is to provide a decorative sheet that can be used in Europe and other countries where the regulation of vinyl chloride-based resins has progressed; can be bonded to an adherend, such as a chipboard, to form a decorative plate that suppresses the appearance of unevenness of the adherend on the surface of the decorative plate; has excellent emboss-forming properties; suppresses embossing collapse when bonded to an adherend; has excellent curling resistance; and can be wound in a roll shape.

There is described a decorative sheet according to a general embodiment. Said "general embodiment", as described herein, is not part of the invention. According to said general embodiment the decorative sheet comprising a base material sheet, and at least a picture pattern layer, a transparent resin layer, and a surface-protecting layer laminated in this order on the base material sheet, wherein (1) the surface-protecting layer having a specific thickness contains fine particles A having a particle size equal to or less than the thickness of the surface-protecting layer, and fine particles B having a particle size greater than the thickness of the surface-protecting layer; the content of the fine particles A and the content of the fine particles B are specific contents; the base material sheet and the transparent resin layer each contain a non-halogen-based thermoplastic resin; the base material sheet has a specific thickness, and a region having a Martens hardness of 50 N/mm² or more with a specific thickness (120 µm or more) on a surface opposite to a surface of the base material sheet on the picture pattern layer side; and embossing is performed from the surface-protecting layer side.

Further, as a result of extensive research, the present inventors found that, according to the present invention, the above object can be achieved by a decorative sheet comprising a base material sheet, and at least a transparent resin layer and a surface-protecting layer sequentially laminated on the base material sheet, and the decorative sheet comprising at least a backer layer laminated on a back surface of the base material sheet; wherein the surface roughness of the decorative sheet is within a specific range; the base material sheet, the transparent resin layer, and the surface-protecting layer each contain a specific resin; and the backer layer containing a specific resin and having specific thickness and hardness is laminated by extrusion molding. Thus, the present invention has been completed.

Specifically, the present invention relates to a decorative sheet, decorative plate, and processes for producing the same, as defined in the claims.

The decorative sheet of the present invention can be used in Europe and other countries where the regulation of vinyl chloride-based resins has progressed, and can be bonded to an adherend, such as a chipboard, to form a decorative plate that suppresses the appearance of unevenness of the adherend on the surface of the decorative plate.

Moreover, the decorative sheet of the general embodiment can be used in Europe and other countries where the regulation of vinyl chloride-based resins has progressed; can be bonded to an adherend, such as a chipboard, to form a decorative plate that suppresses the appearance of unevenness of the adherend on the surface of the decorative plate; has excellent emboss-forming properties; suppresses embossing collapse when bonded to an adherend; has excellent scratch resistance even under service conditions, such as walking with shoes on; suppresses gloss changes, such as gloss appearance, on the surface; and has excellent curling resistance.

Furthermore, according to the decorative sheet of the present invention, when the surface roughness of the decorative sheet is within a specific range, the base material sheet, the transparent resin layer, and the surface-protecting layer each contain a specific resin, and the backer layer containing a specific resin and having specific thickness and hardness is laminated by extrusion molding, the decorative sheet of the present invention can be used in Europe and other countries where the regulation of vinyl chloride-based resins has progressed; can be bonded to an adherend, such as a chipboard, to form a decorative plate that suppresses the appearance of unevenness of the adherend on the surface of the decorative plate; has excellent emboss-forming properties; suppresses embossing collapse when bonded to an adherend; has excellent curling resistance; has no cracks on the surface thereof; and can be wound in a roll shape without strain.
Fig. 1 shows a cross-sectional view of an example of the decorative sheet according to the general embodiment, which is not part of the invention.
Fig. 2 shows a method for measuring Martens hardness. Specifically, (a) shows a diamond indenter used in the measurement of Martens hardness in the present specification; (b) shows a schematic diagram of the press operation; and (c) shows an example of press load and displacement.
Fig. 3 is a cross-sectional view schematically showing an example of the decorative sheet according to the general embodiment.
Fig. 4 is a cross-sectional view schematically showing an example of the decorative sheet according to the general embodiment.
Fig. 5 is a cross-sectional view schematically showing an example of the decorative sheet according to the general embodiment.
Fig. 6 is a cross-sectional view schematically showing an example of the decorative sheet according to the present invention.

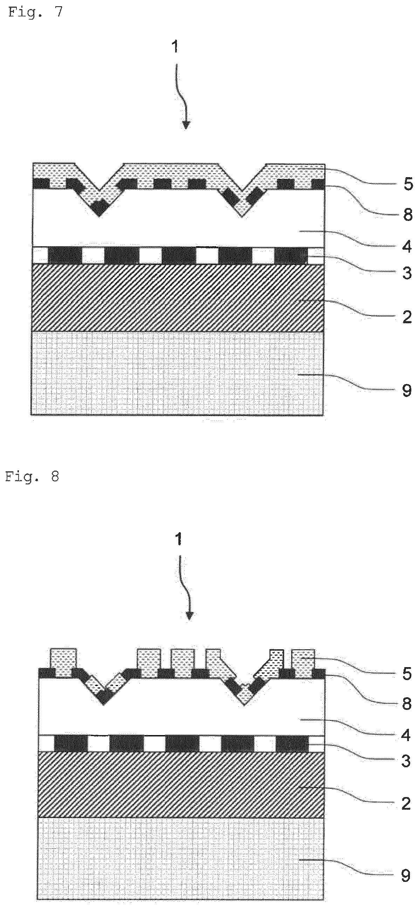

Fig. 7 is a cross-sectional view schematically showing an example of the decorative sheet according to the present invention.
Fig. 8 is a cross-sectional view schematically showing an example of the decorative sheet according to the present invention.

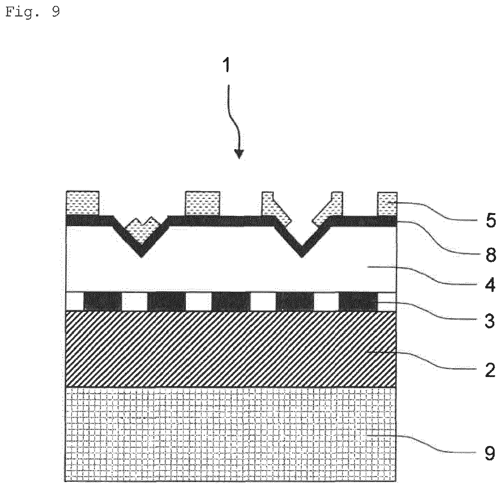

Fig. 9 is a cross-sectional view schematically showing an example of the decorative sheet according to the present invention.

### 1. General Embodiment

N.B.: as indicated before, the "general embodiment" is not part of the invention.

In the decorative sheet of the general embodiment,
(1) the surface-protecting layer has a thickness of 7 to 30 µm, and contains fine particles A having a particle size equal to or less than the thickness of the surface-protecting layer, and fine particles B having a particle size greater than the thickness of the surface-protecting layer; and
(2) the content of the fine particles A and the content of the fine particles B are each 5 to 30 parts by mass based on 100 parts by mass of a resin component of the surface-protecting layer, and the total content of the fine particles A and B is 15 to 35 parts by mass based on 100 parts by mass of the resin component of the surface-protecting layer.
Therefore, scratch resistance is excellent even under service conditions, such as walking with shoes on. In particular, gloss appearance on the surface due to scratches caused by a low load is suppressed.

That is, low gloss is ensured because the surface-protecting layer contains a specific amount of the fine particles A having a particle size equal to or less than the thickness of the surface-protecting layer. Accordingly, gloss appearance is less likely to occur even when a few scratches are made by a low load. Moreover, due to a specific content of the fine particles B having a particle size greater than the thickness of the surface-protecting layer, the fine particles B project from the surface-protecting layer, and scratch resistance is thus excellent. If the surface-protecting layer contains only the fine particles A, their small particle size makes it easier to damage the resin forming the surface of the surface-protecting layer, and scratch resistance is not sufficient. Conversely, if the surface-protecting layer contains only the fine particles B, portions of the fine particles B projecting from the surface-protecting layer are rubbed and shaved, and gloss appears on the rubbed portions and is noticeable. Thus, scratch resistance (suppression of gloss appearance on the surface) is not sufficient.

Moreover, in the decorative sheet, (3) the base material sheet and the transparent resin layer each contain a non-halogen-based thermoplastic resin; therefore, the decorative sheet can be used in Europe and other countries where the regulation of vinyl chloride-based resins has progressed in consideration of environmental problems.

Furthermore, in the decorative sheet, (4) the base material sheet has a thickness of 180 to 350 µm, and a region having a Martens hardness of 50 N/mm² or more is present with a thickness of 120 µm or more from a surface opposite to a surface of the base material sheet on the picture pattern layer side; therefore, when the decorative sheet is bonded to an adherend, such as a chipboard, to form a decorative plate, the appearance of surface unevenness of the adherend on the surface of the decorative sheet is suppressed. Accordingly, it is not necessary to increase the thickness of the decorative sheet in order to suppress the appearance of surface unevenness of the adherend on the surface of the decorative sheet. Thus, emboss-forming properties are excellent. This suppresses embossing collapse when the decorative sheet is bonded to an adherend, and also prevents a decrease in designability. Further, because it is not necessary to increase the thickness of the decorative sheet, as described above, curliness is less likely to occur even when the decorative sheet is stored in a rolled state, and curling resistance is excellent. Thus, it is possible to perform roll laminating.

Moreover, when the appearance of surface unevenness of the adherend on the surface of the decorative sheet is suppressed, there are less projecting portions on the surface of the decorative sheet, and scratch formation caused by rubbing the portions by walking is suppressed. Thus, scratch resistance is excellent.

Furthermore, in the decorative sheet, (5) embossing is performed from the surface-protecting layer side; thus, designability is excellent. Further, since the decorative sheet is embossed, load is dispersed when the decorative sheet is rubbed during walking, and scratch resistance is excellent.

As described above, due to the above structure, the decorative sheet of the general embodiment can be bonded to an adherend, such as a chipboard, to form a decorative plate that suppresses the appearance of unevenness of the adherend on the surface of the decorative plate; has excellent emboss-forming properties; suppresses embossing collapse when bonded to an adherend; has excellent scratch resistance even under service conditions, such as walking with shoes on; suppresses gloss appearance on the surface; and has excellent curling resistance.

The decorative sheet of the general embodiment is described in detail below.

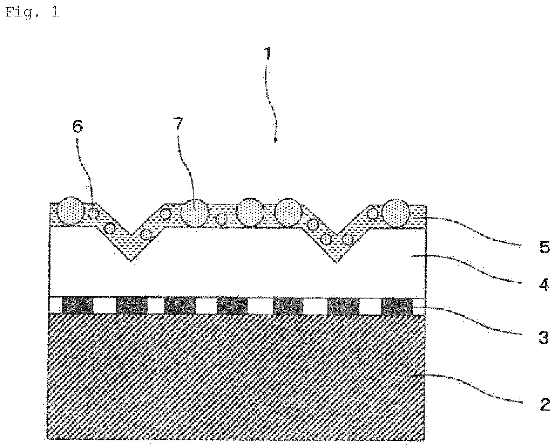

Fig. 1 is a cross-sectional view showing an example of the decorative sheet of the general embodiment. The decorative sheet 1 shown in Fig. 1 comprises a base material sheet 2, and a picture pattern layer 3, a transparent resin layer 4, and a surface-protecting layer 5 laminated on the base material sheet 2. The surface-protecting layer 5 contains fine particles A6 having a particle size equal to or less than the thickness of the surface-protecting layer 5, and fine particles B7 having a particle size greater than the thickness of the surface-protecting layer.

Each of the layers constituting the decorative sheet of the general embodiment is described in detail below.

### Base Material Sheet

The base material sheet is a layer on the surface (front surface) of which a picture pattern layer, etc., are sequentially laminated. The base material sheet contains a non-halogen-based thermoplastic resin.

Examples of such non-halogen-based thermoplastic resins include olefin-based thermoplastic resins, such as low-density polyethylene (including linear low-density polyethylene), medium-density polyethylene, high-density polyethylene, ethylene-α-olefin copolymers, homopolypropylene, polymethylpentene, polybutene, ethylene-propylene copolymers, propylene-butene copolymers, ethylene-vinyl acetate copolymers, saponified products of ethylene-vinyl acetate copolymers, and mixtures thereof; thermoplastic ester-based resins, such as polyethylene terephthalate, polybutylene terephthalate, polyethylene naphthalate, polyethylene naphthalate-isophthalate copolymers, polycarbonate, and polyarylate; acrylic thermoplastic resins, such as polymethyl methacrylate, polyethyl methacrylate, polyethyl acrylate, and polybutyl acrylate; polyamide-based thermoplastic resins, such as Nylon-6 and Nylon-66; polyimide, polyurethane, polystyrene, acrylonitrile-butadiene-styrene resins; etc. These non-halogen-based thermoplastic resins may be used singly or in a combination of two or more. Among these, olefin-based thermoplastic resins are preferred in terms of the excellent printability of the picture pattern layer, excellent embossing suitability, and inexpensiveness.

The base material sheet may be colored. In this case, the base material sheet can be colored by adding a colorant (pigment or dye) to a non-halogen-based thermoplastic resin mentioned above. Examples of colorants include inorganic pigments, such as titanium dioxide, carbon black, and iron oxide; organic pigments, such as phthalocyanine blue; and various dyes. One or more such colorants may be selected from known or commercially available products. The amount of colorant(s) may be determined according to the desired color, etc.

The base material sheet may contain various additives, such as fillers, matting agents, foaming agents, flame retardants, lubricants, antistatic agents, antioxidants, ultraviolet absorbers, and light stabilizers, as required.

The thickness of the base material sheet is 180 to 350 µm. If the thickness of the base material sheet is less than 180 µm, the appearance of unevenness of the adherend on the surface of the decorative plate cannot be sufficiently suppressed. If the thickness of the base material sheet exceeds 350 µm, curliness occurs when the decorative sheet is stored in a rolled state, thereby making it difficult to perform roll laminating. The thickness of the base material sheet can be suitably determined within the above range, depending on the application of the final product, the method of use of the final product, etc.; however, the thickness of the base material is preferably 180 to 310 µm.

In the base material sheet, a region having a Martens hardness of 50 N/mm² or more is present with a thickness of 120 µm or more from a surface opposite to a surface of the base material sheet on the picture pattern layer side. If the thickness of this region is less than 120 µm, the appearance of unevenness of the adherend on the surface of the decorative plate cannot be sufficiently suppressed. It is preferable that the region having a Martens hardness of 50 N/mm² or more be present with a thickness of 120 to 250 µm from a surface opposite to a surface of the base material sheet on the picture pattern layer side. If the thickness of this region is too thick, curliness occurs when the decorative sheet is stored in a rolled state, which may make it difficult to perform roll laminating.

In the base material sheet, the region present with a thickness of 120 µm or more from a surface opposite to a surface of the base material sheet on the picture pattern layer side has a Martens hardness of 50 N/mm² or more.

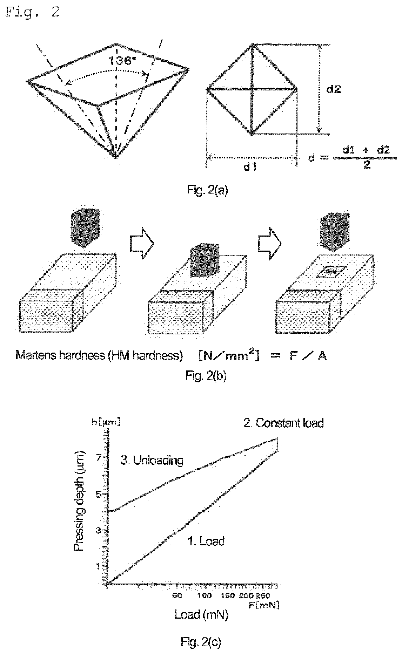

In the present specification, the Martens hardness is measured by using a surface film physical property tester (PICODENTOR HM-500, produced by Fischer Instruments). The specific measurement method is as follows. In this measurement method, a diamond indenter (Vickers indenter) shown in Fig. 2(a) is pressed into a measuring sample, as shown in Fig. 2(b). The surface area A (mm²) is calculated from the length of the diagonal lines of the pyramidal cavity formed on the surface, and test load F (N) is divided by the surface area A to thereby determine the hardness. The pressing conditions are as follows. First, 0 to 5 mN load is applied for 10 seconds at room temperature (laboratory environmental temperature), as shown in Fig. 2(c). Next, 5 mN load is maintained for 5 seconds. Finally, unloading is performed from 5 to 0 mN for 10 seconds. Then, the hardness determined by F/A, wherein A is surface area and F is test load, is the Martens hardness mentioned above. In the present specification, in order to avoid the influence of the hardness of layers other than the base material sheet, the Martens hardness of the cross-section of the base material sheet was measured. In this case, the decorative sheet was embedded in a resin (cold curing-type epoxy two-component curable resin), and cured by allowing it to stand at room temperature for 24 hours or more. Then, the cured embedded sample was mechanically polished to expose the cross-section of the base material sheet, and the diamond indenter was pressed into the cross-section to thereby measure the Martens hardness of the cross-section.

The Martens hardness of the base material sheet can be suitably determined by, for example, 1) mixing a plurality of resin components, or 2) adding an elastomer to the resin.

The base material sheet may be a single layer or a multilayer, as long as the total thickness is 180 to 350 µm, and a region having a Martens hardness of 50 N/mm² or more is present with a thickness of 120 µm or more from a surface opposite to a surface of the base material sheet on the picture pattern layer side.

When the base material sheet is a multilayer, the layer structure thereof is, for example, such that a single layer having a Martens hardness of 50 N/mm² or more is present with a thickness of 120 µm or more on a surface opposite to a surface of the decorative sheet on the picture pattern layer side, and such that a layer having a Martens hardness of less than 50 N/mm² is laminated on the surface of this layer on the picture pattern layer side. Alternatively, a plurality of layers each having a Martens hardness of 50 N/mm² or more may be laminated to reach a thickness of 120 µm or more.

When the base material sheet is a single layer, as long as the region having a Martens hardness of 50 N/mm² or more is present with a thickness of 120 µm or more from a surface opposite to a surface of the base material sheet on the picture pattern layer side, the Martens hardness of a region closer to the picture pattern layer side may be gradually reduced to less than 50 N/mm².

The surface (front surface) of the base material sheet may be subjected to a corona discharge treatment in order to increase the adhesion of the ink that forms the picture pattern layer. Methods and conditions for the corona discharge treatment may be determined according to known methods. If necessary, a corona discharge treatment may also be performed on the back surface of the base material sheet, or a back-surface primer layer, described later, may be formed.

### Picture Pattern Layer

The picture pattern layer gives a desired picture (design) to the decorative sheet, and the type, etc., of picture are not limited. Examples thereof include wood grain patterns, leather patterns, marble grain patterns, pebbly patterns, tiled patterns, brick-masonry patterns, textile patterns, geometric figures, characters, symbols, and abstraction patterns.

The method of forming the picture pattern layer is not particularly limited. For example, the picture pattern layer may be formed on the surface of the base material sheet by a printing method that uses ink obtained by dissolving (or dispersing) a known colorant (dye or pigment) together with a binding resin in a solvent (or a dispersion medium) . The ink can be an aqueous composition, in terms of reducing the VOC of the decorative sheet.

Examples of colorants include inorganic pigments, such as carbon black, titanium white, zinc white, red oxide, Berlin blue, and cadmium red; organic pigments, such as azo pigments, lake pigments, anthraquinone pigments, quinacridone pigments, phthalocyanine pigments, isoindolinone pigments, and dioxazine pigments; metallic powder pigments, such as aluminium powder and bronze powder; pearlescent pigments, such as titanium oxide-coated mica and bismuth chloride oxide; fluorescent pigments; noctilucent pigments; and the like. Such colorants may be used singly or in a combination of two or more. These colorants may be used in combination with a filler (e.g., silica), an extender pigment (e.g., organic beads), a neutralizer, a surfactant, etc.

Examples of binding resins include hydrophilized polyester-based urethane resins, which can be used in combination with polyesters, polyacrylates, polyvinyl acetate, polybutadiene, polyvinyl chloride, chlorinated polypropylene, polyethylene, polystyrene, polystyrene-acrylate copolymers, rosin derivatives, alcohol adducts of styrene-maleic anhydride copolymers, cellulose-based resins, etc. Specific examples include polyacrylamide-based resins, poly(meth)acrylate-based resins, polyethylene oxide-based resins, poly N-vinyl-pyrrolidone-based resins, water-soluble polyester-based resins, water-soluble polyamide-based resins, water-soluble amino-based resins, water-soluble phenol-based resins, and other water-soluble synthetic resins; polynucleotides, polypeptides, polysaccharides, and like water-soluble natural polymers; etc. Other examples include natural rubber, synthetic rubber, polyvinyl acetate-based resins, (meth)acrylic-based resins, polyvinyl chloride-based resins, modified polyurethane-polyacrylic-based resins, etc., mixtures of natural rubber and the like mentioned above, and other resins. These binding resins can be used singly or in a combination of two or more.

Examples of the solvent (or dispersion medium) include petroleum-based organic solvents, such as hexane, heptane, octane, toluene, xylene, ethylbenzene, cyclohexane, and methylcyclohexane; ester-based organic solvents, such as ethyl acetate, butyl acetate, acetic acid-2-methoxyethyl, and acetic acid-2-ethoxyethyl; alcohol-based organic solvents, such as methyl alcohol, ethyl alcohol, normal propyl alcohol, isopropyl alcohol, isobutyl alcohol, ethylene glycol, and propylene glycol; ketone-based organic solvents, such as acetone, methyl ethyl ketone, methyl isobutyl ketone, and cyclohexanone; ether-based organic solvents, such as diethyl ether, dioxane, and tetrahydrofuran; chlorine-based organic solvents, such as dichloromethane, carbon tetrachloride, trichloroethylene, and tetrachloroethylene; inorganic solvents, such as water; and the like. These solvents (or dispersion media) can be used singly or in a combination of two or more.

Examples of the printing method for forming the picture pattern layer include gravure printing, offset printing, screen printing, flexo printing, electrostatic printing, ink jet printing, etc. When a solid-like picture pattern layer is formed over the entire surface, various coating methods, such as roll coating, knife coating, air-knife coating, dye coating, lip coating, comma coating, kiss coating, flow coating, and dip coating, can be used. In addition to the above, usable examples include hand-drawing methods, marbling methods, photographic methods, transfer methods, laser beam drawing methods, electron beam drawing methods, metal partial deposition methods, etching methods, etc. Such methods may be used in combination with other methods.

The thickness of the picture pattern layer is not particularly limited, and can be suitably determined according to product characteristics. The layer thickness during coating is about 1 to 15 µm, and the layer thickness after drying is about 0.1 to 10 µm.

### Transparent Resin Layer

The transparent resin layer is not particularly limited, as long as it is transparent. Any of colorless transparent, colored transparent, and semitransparent is included. The transparent resin layer contains a non-halogen-based thermoplastic resin.

Examples of such non-halogen-based thermoplastic resins include olefin-based thermoplastic resins, such as low-density polyethylene (including linear low-density polyethylene), medium-density polyethylene, high-density polyethylene, ethylene-α-olefin copolymers, homopolypropylene, polymethylpentene, polybutene, ethylene-propylene copolymers, propylene-butene copolymers, ethylene-vinyl acetate copolymers, saponified products of ethylene-vinyl acetate copolymers, and mixtures thereof; thermoplastic ester-based resins, such as polyethylene terephthalate, polybutylene terephthalate, polyethylene naphthalate, polyethylene naphthalate-isophthalate copolymers, polycarbonate, and polyarylate; acrylic thermoplastic resins, such as polymethyl methacrylate, polyethyl methacrylate, polyethyl acrylate, and polybutyl acrylate; polyamide-based thermoplastic resins, such as Nylon-6 and Nylon-66; polyimide, polyurethane, polystyrene, acrylonitrile-butadiene-styrene resins; etc. These non-halogen-based thermoplastic resins may be used singly or in a combination of two or more. Among these, olefin-based thermoplastic resins are preferred in terms of the excellent printability of the picture pattern layer, excellent embossing suitability, and inexpensiveness.

The transparent resin layer may be colored, as long as it is transparent; however, it is particularly desirable that a colorant is not mixed.

The Martens hardness of the transparent resin layer is preferably 20 to 40 N/mm², and more preferably 30 to 40 N/mm². If the Martens hardness of the transparent resin layer is too high, the decorative sheet may have inferior curling resistance. If the Martens hardness of the transparent resin layer is too low, when the decorative sheet is bonded to an adherend to form a decorative plate, surface unevenness of the adherend may likely appear on the surface of the decorative plate.

The thickness of the transparent resin layer is preferably about 20 to 200 µm, and more preferably 80 to 100 µm. The thickness of the transparent resin layer may exceed the above range, depending on the application, etc., of the decorative sheet.

### Surface-Protecting Layer

The decorative sheet comprises a surface-protecting layer formed on the surface thereof. The thickness of the surface-protecting layer of the decorative sheet is 7 to 30 µm. If the thickness of the surface-protecting layer is thinner than 7 µm, it is difficult to form an embossed shape, and designability is inferior. Further, if the thickness of the surface-protecting layer is thinner than 7 µm, the embossed shape is not sufficiently formed; therefore, load applied when the surface of the decorative sheet is rubbed is hardly dispersed, and scratch resistance is inferior. In contrast, if the thickness of the surface-protecting layer exceeds 30 µm, curliness occurs when the decorative sheet is stored in a rolled state, and it is difficult to perform roll laminating. The thickness of the surface-protecting layer is preferably 10 to 20 µm.

When the decorative sheet has a gloss-adjusting layer, described later, the surface-protecting layer is formed adjacent to the gloss-adjusting layer. Specifically, the back surface and/or side surface of the surface-protecting layer are/is adjacent to the gloss-adjusting layer. When the decorative sheet has a gloss-adjusting layer, the surface-protecting layer is preferably transparent.

The surface-protecting layer contains fine particles A having a particle size equal to or less than the thickness of the surface-protecting layer, and fine particles B having a particle size greater than the thickness of the surface-protecting layer. In the present specification, it can be confirmed by a SEM (scanning electron microscope) that the particle size of the fine particles A is equal to or less than the thickness of the surface-protecting layer, and that the particle size of the fine particles B is greater than the thickness of the surface-protecting layer. For example, it can be confirmed by cutting the decorative sheet in a direction perpendicular to the surface thereof, and observing the part of the surface-protecting layer of the obtained cross-section using a SEM (scanning electron microscope).

The particle size of the fine particles A is not particularly limited, as long as it is equal to or less than the thickness of the surface-protecting layer. If the particle size of the fine particles A exceeds the thickness of the surface-protecting layer, the matte effect is not sufficient. Further, the fine particles A project from the surface-protecting layer, and portions of the fine particles A projecting from the surface-protecting layer are rubbed and shaved. Gloss appears on the rubbed portions and is noticeable, and scratch resistance is not sufficient.

The particle size of the fine particles A is preferably 3 to 15 µm, and more preferably 8 to 12 µm. If the particle size of the fine particles A is too small, the matte effect may not be sufficient.

The content of the fine particles A is 5 to 30 parts by mass based on 100 parts by mass of the resin component of the surface-protecting layer. If the content of the fine particles A is too high, the number of the fine particles A projecting from the surface-protecting layer increases. When the projecting portions are rubbed and shaved, gloss appears on the rubbed portions and is noticeable, and scratch resistance is not sufficient. In contrast, if the content of the fine particles A is too low, the matte effect is not sufficient. The content of the fine particles A is preferably 10 to 20 parts by mass based on 100 parts by mass of the resin component of the surface-protecting layer.

The particle size of the fine particles B is not particularly limited, as long as it is greater than the thickness of the surface-protecting layer. If the particle size of the fine particles B is equal to or less than the thickness of the surface-protecting layer, the scratch resistance of the surface-protecting layer is not sufficient.

The particle size of the fine particles B is preferably 8 to 33 µm, and more preferably 8 to 20 µm. If the particle size of the fine particles B is too large, they may be easily removed from the surface-protecting layer.

The content of the fine particles B is 5 to 30 parts by mass based on 100 parts by mass of the resin component of the surface-protecting layer. If the content of the fine particles B is too high, when projecting portions of the fine particles B are rubbed and shaved, gloss appears on the rubbed portions and is noticeable, and scratch resistance is not sufficient. In contrast, if the content of the fine particles B is too low, the scratch resistance of the surface-protecting layer is not sufficient. The content of the fine particles B is preferably 10 to 20 parts by mass based on 100 parts by mass of the resin component of the surface-protecting layer.

In the present specification, the particle size of the fine particles A and B can be measured by a SEM (scanning electron microscope). For example, the particle size can be measured by cutting the decorative sheet in a direction perpendicular to the surface thereof, photographing any part of the obtained cross-section of the surface-protecting layer using a SEM (scanning electron microscope), and averaging the particle size (diameter) of each of the photographed fine particles A and B.

The total content of the fine particles A and B is 15 to 35 parts by mass based on 100 parts by mass of the resin component of the surface-protecting layer. If the total content of the fine particles A and B is too low, the surface-protecting layer has inferior scratch resistance and designability (low gloss). If the total content of the fine particles A and B is too high, there are many projecting portions of the fine particles A and B. When these portions are rubbed and shaved, gloss appears on the rubbed portions and is noticeable, and scratch resistance is not sufficient. The total content of the fine particles A and B is preferably 20 to 35 parts by mass based on 100 parts by mass of the resin component of the surface-protecting layer.

The fine particles A and B are not particularly limited, as long as they can impart scratch resistance to the surface-protecting layer depending on the particle size, and have a matte effect. Known fine particles can be used. Examples of the fine particles A and B include inorganic particles, such as silica fine particles and silicone resin; organic particles, such as crosslinked alkyl, crosslinked styrene, benzoguanamine resin, urea-formaldehyde resin, phenolic resin, polyethylene, and nylon; and the like. Among these, silica fine particles are preferred.

It is not limited thereto, but the surface-protecting layer preferably contains an ionizing radiation-curable resin or a two-component curable urethane-based resin as the resin component. It is preferable that the surface-protecting layer be substantially formed of these resins. When the surface-protecting layer is formed of one or more ionizing radiation-curable resins or one or more two-component curable urethane-based resins, the abrasion resistance, impact resistance, stain resistance, scratch resistance, weather resistance, and the like of the decorative sheet can be easily enhanced. Among these, ionizing radiation-curable resins are more preferred.

Ionizing radiation-curable resins are not particularly limited. Usable examples thereof include transparent resins comprising, as a main component, one or more prepolymers (including oligomers) and/or one or more monomers that contain, in the molecule, a radically polymerizable double bond that can undergo the crosslinking polymerization reaction by irradiation of ultraviolet rays, electron beams, or like ionizing radiation. These prepolymers or monomers can be used singly or in a combination of two or more. The curing reaction is generally conducted through a crosslinking curing reaction.

Specific examples of the prepolymers or monomers are compounds that contain, in the molecule, a radically polymerizable unsaturated group, such as a (meth)acryloyl group or (meth)acryloyloxy group; a cation-polymerizable functional group, such as an epoxy group; etc. Furthermore, polyene/thiol-based prepolymers comprising polyene and polythiol in combination are also preferable. In this specification, a (meth)acryloyl group means an acryloyl group or a methacryloyl group.

Examples of prepolymers comprising a radically polymerizable unsaturated group include polyester (meth)acrylate, urethane (meth)acrylate, epoxy (meth)acrylate, melamine (meth)acrylate, triazine (meth)acrylate, silicone (meth)acrylate, and the like. It is preferable that such prepolymers generally have a molecular weight of about 250 to 100,000.

Examples of monomers comprising a radically polymerizable unsaturated group include monofunctional monomers, such as methyl(meth)acrylate, 2-ethylhexyl(meth)acrylate, phenoxyethyl(meth)acrylate, and the like. Moreover, examples of multifunctional monomers include diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, dipentaerythritol hexa(meth)acrylate, and the like.

Examples of prepolymers comprising a cation-polymerizable functional group include prepolymers of epoxy-based resins, such as bisphenol-type epoxy resins and novolac-type epoxy compounds; and prepolymers of vinyl ether-based resins, such as fatty acid-based vinyl ethers and aromatic vinyl ethers. Examples of thiols include polythiols, such as trimethylolpropane trithioglycolate, pentaerythritol tetrathioglycolate, etc. Examples of polyenes include polyurethanes formed of diol and diisocyanate, wherein an allyl alcohol is added to each end thereof.

Electromagnetic waves or charged particles with sufficient energy to activate a curing reaction of the molecules in the ionizing radiation-curable resin (composition) are usable as the ionizing radiation to cure the ionizing radiation-curable resin. Ultraviolet rays or electron beams are generally used, and visible light, X-rays, ionic rays, and the like may also be used.

The two-component curable urethane-based resins are not particularly limited. Usable examples thereof include those comprising a polyol component (e.g., acrylic polyol, polyester polyol, polyether polyol, epoxy polyol, etc.) having a hydroxy group as a main compound, and an isocyanate component (e.g., tolylene diisocyanate, hexamethylene diisocyanate, meta-xylene diisocyanate, etc.), which functions as a curing agent component.

The resins listed above can be used singly or in a combination of two or more.

In order to improve weather resistance, the surface-protecting layer preferably contains an ultraviolet absorber, such as a benzotriazole ultraviolet absorber, a benzophenone ultraviolet absorber, a salicylate ultraviolet absorber, or a triazine ultraviolet absorber. When the resin layer is cured by irradiation with ultraviolet rays, a photoinitiator and a photopolymerization accelerator (sensitizer) can be used. Examples of photoinitiators include acetophenones, benzophenones, Michler's benzoyl benzoate, α-aminoxime ester, tetramethylthiuram monosulfide, thioxanthones, aromatic diazonium salts, aromatic sulfonium salts, metallocene, etc. Examples of photopolymerization accelerators (sensitizers) include n-butylamine, triethylamine, tri-n-butylphosphine, etc.

Further, an antibacterial agent may be added to the surface-protecting layer in order to impart antibacterial properties. Examples of antibacterial agents include inorganic antibacterial agents and organic antibacterial agents. In particular, inorganic antibacterial agents are preferred because they generally have higher safety than, and durability and heat resistance superior to, organic antibacterial agents. Inorganic antibacterial agents are those in which antibacterial metals, including silver, copper, zinc, etc., are supported by various inorganic supports. The amount of antibacterial agent added is preferably 0.1 to 10 parts by mass based on 100 parts by mass of the resin component.

The surface-protecting layer may further contain various additives, such as solvents, colorants (e.g., dyes and pigments), fillers (e.g., extenders), antifoaming agents, leveling agents, and thixotropy-imparting agents, as required.

The surface-protecting layer can be formed, for example, by applying an ionizing radiation-curable resin or a two-component curable urethane-based resin to the transparent resin layer or a gloss-adjusting layer, described later, by a known coating method, such as gravure coating or roll coating, and then curing the resin. When a surface-protecting layer is formed in part of the front surface of the decorative sheet, the surface-protecting layer can be formed by partially (e.g., in a pattern shape) applying the surface-protecting layer-forming resin composition, and then curing the ionizing radiation-curable resin in the resin composition. In contrast, when a surface-protecting layer is formed on the entire front surface of the decorative sheet, the surface-protecting layer can be formed by applying the surface-protecting layer-forming resin composition to the entire surface (across the entire surface), and then curing the ionizing radiation-curable resin in the resin composition.

The gloss value of the surface-protecting layer can be adjusted, for example, by a method to select the type of each of the substances, such as resin components and additives, contained in the surface-protecting layer, or a method to suitably determine the content of each of the above substances.

### (Layer Structure of Decorative Sheet)

The specific structure (layer structure) of the decorative sheet of the general embodiment is not limited, as long as at least a picture pattern layer, a transparent resin layer, and a surface-protecting layer are laminated in this order on a base material sheet. Examples include a decorative sheet comprising a base material sheet, and a picture pattern layer, a transparent adhesive layer, a transparent resin layer, a primer layer, and a surface-protecting layer sequentially laminated on the base material sheet. In the general embodiment, a direction viewed from the base material sheet where the surface-protecting layer is laminated is referred to as "above" or "the front surface," and a direction viewed from the base material sheet where a back-surface primer layer is laminated is referred to as "below" or "the back surface." "The front surface (side)" or "the surface on the surface-protecting layer (side)" of the decorative sheet or the decorative plate means the surface of the decorative sheet or the decorative plate to be viewed after the installation thereof.

Using the decorative sheet having the above layer structure as a representative example, layers other than the above-described base material sheet, picture pattern layer, transparent resin layer, and surface-protecting layer are described in detail below.

### Transparent Adhesive Layer

In order to increase the adhesion between the transparent resin layer and the picture pattern layer, a transparent adhesive layer may be formed on the picture pattern layer. The transparent adhesive layer is not particularly limited, as long as it is transparent. Any of colorless transparent, colored transparent, and semitransparent is included.

The adhesive is not particularly limited, and any adhesive known in the field of decorative sheets can be used. Examples of adhesives known in the field of decorative sheets include thermoplastic resins, such as polyamide resin, acrylic resin, and vinyl acetate resin; thermosetting resins, such as urethane-based resin; and the like. These adhesives can be used singly or in a combination of two or more. It is also possible to use a two-component curable polyurethane resin containing isocyanate as a curing agent or a polyester resin.

Although the thickness of the transparent adhesive layer is not particularly limited, the thickness after drying is about 0.1 to 30 µm, and preferably about 1 to 20 µm.

### Primer Layer

A primer layer may be provided on the transparent resin layer. The primer layer can be formed by applying a known primer agent to the surface of the transparent resin layer. Examples of primer agents include urethane resin primer agents comprising an acrylic-modified urethane resin (an acrylic urethane resin), primer agents comprising a urethane-cellulose resin (e.g., a resin obtained by adding hexamethylene diisocyanate to a mixture of urethane and nitrocellulose), resin primer agents comprising a block copolymer of acrylic and urethane. Additives may be added to the primer agent, as required. Examples of additives include fillers, such as calcium carbonate and clay; flame retardants, such as magnesium hydroxide; antioxidants; lubricants; foaming agents; ultraviolet absorbers; light stabilizers; etc. The amount of additives can be suitably determined according to product characteristics.

The coating amount of the primer agent is not particularly limited, but is generally about 0.1 to 100 g/m², and preferably about 0.1 to 50 g/m².

The thickness of the primer layer is not particularly limited, but is generally about 0.01 to 10 µm, and preferably about 0.1 to 1 µm.

### Gloss-Adjusting Layer

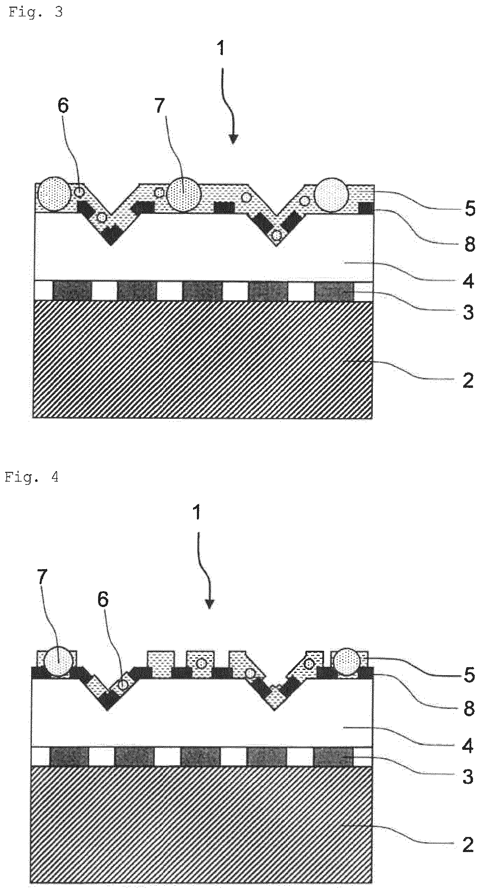

The decorative sheet may comprise a gloss-adjusting layer. For example, Figs. 3 to 5 show embodiments of decorative sheets comprising a gloss-adjusting layer.

When the decorative sheet comprises a gloss-adjusting layer, the gloss-adjusting layer is formed on the transparent resin layer so as to be adjacent to the surface-protecting layer. More specifically, the back surface of the gloss-adjusting layer is adjacent to the front surface of the transparent resin layer (or the primer layer when the decorative sheet has the primer layer), and the front surface and/or side surface of the gloss-adjusting layer are/is adjacent to the surface-protecting layer.

In terms of designability, the gloss-adjusting layer may be formed (1) in part of the front surface (the surface of the decorative sheet or the decorative plate to be viewed after the installation thereof), or (2) in the entire front surface (entire surface). That is, the gloss-adjusting layer may be formed (1) partially on the front surface, or (2) entirely on the front surface.

When (1) the gloss-adjusting layer is formed in part of the front surface, (a) the surface-protecting layer may be formed in part of the front surface, or (b) the surface-protecting layer may be formed on the entire front surface. When the gloss-adjusting layer and the surface-protecting layer are both formed in part of the front surface (in the case of (1) (a) above), the surface-protecting layer is formed so as to cover a region in which the gloss-adjusting layer is not formed (a region in which the gloss-adjusting layer is not present).

In the embodiment of Fig. 3, the gloss-adjusting layer is formed in part of the front surface, and the surface-protecting layer is formed on the entire front surface (embodiment (1) (b) above) . In the embodiment of Fig. 4, the gloss-adjusting layer is formed in part of the front surface, and the surface-protecting layer is formed in part of the front surface (embodiment (1) (a) above).

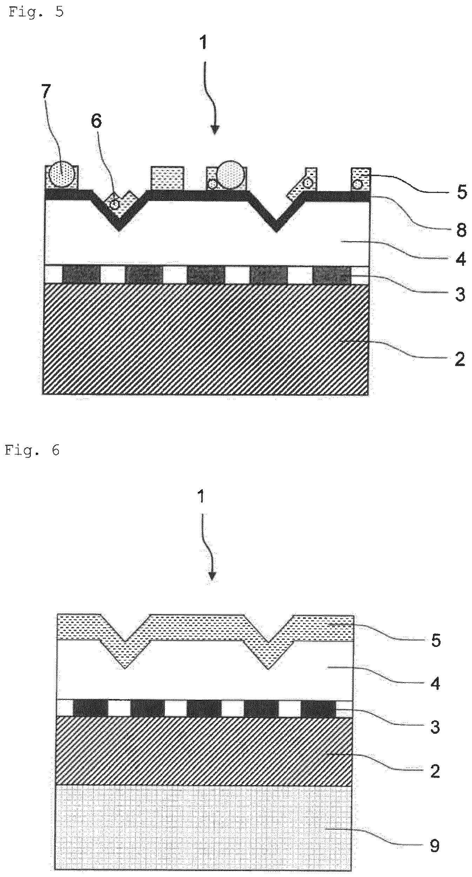

On the other hand, when (2) the gloss-adjusting layer is formed on the entire front surface, the surface-protecting layer is formed in part of the front surface. In the embodiment of Fig. 5, the gloss-adjusting layer is formed on the entire front surface, and the surface-protecting layer is formed in part of the front surface (embodiment (2) above).

Here, the gloss value of the gloss-adjusting layer is represented by G_{A}, and the gloss value of the surface-protecting layer is represented by Gp. When the decorative sheet has a gloss-adjusting layer, the relationship between the gloss value G_{A} of the gloss-adjusting layer and the gloss value Gp of the surface-protecting layer is G_{P} ≠ G_{A}. The values G_{A} and G_{P} in the present specification are measured according to Japanese Industrial Standard JIS Z8741. Specifically, the gloss value is measured by a gloss meter (PG-3D, produced by Nippon Denshoku Industries Co., Ltd.) at an incident angle of 60°. In the present specification, the gloss value (*tsuya chi,* in Japanese) is also called *"koutaku chi"* or *"gurosu chi"* in Japanese.

When (1) the gloss-adjusting layer is formed in part of the front surface, or when (2) the gloss-adjusting layer is formed on the entire front surface, the gloss-adjusting layer and the surface-protecting layer are both viewed from the surface of the decorative sheet or the decorative plate to be viewed after the installation thereof, and the relationship between the gloss value of the gloss-adjusting layer and the gloss value of the surface-protecting layer is Gp ≠ G_{A}. Therefore, when the decorative sheet is bonded to an adherend, the influence of unevenness (daku) formed on the surface of the decorative sheet is further suppressed, and the designability of the decorative sheet or the decorative plate is enhanced. Accordingly, the decorative sheet comprising a gloss-adjusting layer is a preferable embodiment.

Next, the case (1) where the gloss-adjusting layer is formed in part of the front surface (this case is also simply referred to as "the case (1)") is described. In the case (1), it is preferable that the ratio of the area of a region in which the gloss-adjusting layer is formed, per cm² of the area of the front surface of the decorative sheet or the decorative plate be 20 to 80%. In this case, it is preferable that the gloss-adjusting layer be formed so that the front surface (the surface to be viewed) of the gloss-adjusting layer has a picture pattern. When the gloss-adjusting layer has a picture pattern, and the above-mentioned area ratio is 20 to 80%, the gloss difference between the gloss-adjusting layer and the surface-protecting layer is more significant, and designability is consequently enhanced. In addition, it is possible to further suppress the influence of unevenness. When the gloss-adjusting layer is formed to have a picture pattern, the type of picture pattern is not particularly limited. Examples of the specific type of picture pattern include the same picture patterns mentioned above as examples of the picture pattern layer.

In the present specification, the ratio of the area of a region in which the gloss-adjusting layer is formed (a region in which the gloss-adjusting layer is present), per cm² of the area of the front surface of the decorative sheet or the decorative plate, is also referred to as "the occupancy area ratio of the gloss-adjusting layer." The occupancy area ratio of the gloss-adjusting layer is calculated from plate-making data in the stage of producing a plate for forming the gloss-adjusting layer. The occupancy area ratio of the gloss-adjusting layer can also be calculated from the shape of the plate.

In the case (1), in order to further suppress the influence of unevenness (in order to make it further difficult to recognize unevenness), the relationship between G_{A} and G_{P} is preferably G_{A} < G_{P}, and more preferably G_{A} < G_{P} and G_{A} ≤ 5.

Next, the case (2) where the gloss-adjusting layer is formed on the entire front surface (this case is also simply referred to as "the case (2)") is described. In the case (2), the surface-protecting layer is formed in part of the front surface. In this case, it is preferable that the surface-protecting layer be formed so that the front surface (the surface to be viewed) of the surface-protecting layer has a picture pattern. This further clarifies the gloss difference between the gloss-adjusting layer and the surface-protecting layer. As a result, designability can be further enhanced, and the influence of unevenness can be further suppressed. When the surface-protecting layer is formed to have a picture pattern, the type of picture pattern is not particularly limited. Examples of the specific type of picture pattern include the same picture patterns mentioned above as examples of the picture pattern layer.

In the case (2), in order to further suppress the influence of unevenness (in order to make it further difficult to recognize unevenness), the relationship between G_{A} and G_{P} is preferably |G_{P}-G_{A}| ≥ 2, and more preferably |G_{P}-G_{A}| ≥ 10 (in other words, the difference between the gloss value of the gloss-adjusting layer and the gloss value of the surface-protecting layer is preferably 2 or more, and this difference is preferably 10 or more) . The relationship between G_{A} and G_{P} may be G_{A} < G_{P} or G_{P} < G_{A}. That is, the gloss of the gloss-adjusting layer may be lower than that of the surface-protecting layer, or the gloss of the surface-protecting layer may be lower than that of the gloss-adjusting layer (in the case of G_{A} < G_{P}, the gloss-adjusting layer is a less-gloss layer; and in the case of G_{P} < G_{A}, the surface-protecting layer is a less-gloss layer). In the case (2), it is preferable that the ratio of the area of a region in which a less-gloss layer is present, per cm² of the area of the front surface of the decorative sheet or the decorative plate exceed 50%.

In the present specification, the ratio of the area of a region in which the surface-protecting layer is formed (a region in which the surface-protecting layer is present), per cm² of the area of the front surface of the decorative sheet or the decorative plate is also referred to as "the occupancy area ratio of the surface-protecting layer." The occupancy area ratio of the surface-protecting layer is calculated from plate-making data in the stage of producing a plate for forming the surface-protecting layer. The occupancy area ratio of the surface-protecting layer can also be calculated from the shape of the plate. On the other hand, the ratio of the area of a region in which the less-gloss layer is exposed (the exposure area ratio of the less-gloss layer), per cm² of the area of the front surface of the decorative sheet or the decorative plate is obtained in the following manner:
(i) when the less-gloss layer is the surface-protecting layer, the occupancy area ratio of the surface-protecting layer is directly used as the occupancy area ratio of the less-gloss layer; or
(ii) when the less-gloss layer is the gloss-adjusting layer, the occupancy area ratio of the surface-protecting layer is calculated, and then the occupancy area ratio of the surface-protecting layer is subtracted from 100 (%).

The method for forming the gloss-adjusting layer is not particularly limited. For example, similar to the picture pattern layer described above, the gloss-adjusting layer can be formed from ink obtained by dissolving (or dispersing) a known colorant (a dye, a pigment, etc.), a vehicle, etc., in a solvent (or a dispersion medium) . The colorant and the solvent can be the same colorant and solvent mentioned above as examples of the colorant and solvent in the picture pattern layer.

The vehicle for the ink forming the gloss-adjusting layer is preferably one containing 50 mass% or more of urethane-based resin and/or polyvinyl acetal-based resin. Examples of urethane-based resins include urethane resins obtained by reacting a polyol component, which is a polyol, such as acrylic polyol, polyester polyol, or polyether polyol, and an isocyanate component, which is an isocyanate, such as an aromatic isocyanate (e.g., tolylene diisocyanate, xylene diisocyanate, or diphenylmethane diisocyanate), or an aliphatic or alicyclic isocyanate (e.g., isophorone diisocyanate, hexamethylene diisocyanate, or hydrogenated tolylene diisocyanate) (both linearly crosslinked resins and mesh-like crosslinked resins can be used). Moreover, polyvinyl acetal-based resins are obtained by condensation (acetalization) of polyvinyl alcohols and aldehydes. Examples of polyvinyl acetal resins include polyvinyl formal (formal resin), polyvinyl acetoacetal, polyvinyl propional, polyvinyl butyral (butyral resin), polyvinyl hexylal, and the like. Among these, polyvinyl butyral is particularly preferred, because it is soluble in a solvent and easily formed into ink, and the appearance of a feeling of visual unevenness (visual recognition as recesses) is excellent.

Further, in order to adjust the gloss value, a gloss-control resin, such as an unsaturated polyester resin, an acrylic resin, or a vinyl chloride-vinyl acetate copolymer, may be mixed, as required. When a gloss-control resin is used, the mixing ratio thereof is preferably within the range of 10 to 50 mass% based on the total weight of the vehicle. The ink forming the gloss-adjusting layer may be colorless, or colored by adding a colorant, such as a pigment.

Further, an extender pigment may be mixed in the ink for forming the gloss-adjusting layer. When an extender pigment is mixed, scattering of light can be promoted, and the effect of removing unevenness (*daku*) can be further enhanced. The extender pigment is not particularly limited. For example, it is suitably selected from silica, talc, clay, barium sulfate, barium carbonate, calcium sulfate, calcium carbonate, magnesium carbonate, etc. Preferred among these is silica, which is a material that has a high degree of freedom in material design, including oil absorbency, particle size, pore volume, etc., and that has excellent designability, whiteness, and coating stability as ink; and silica fine particles are particularly preferred. When an extender pigment is used, the content thereof is preferably 5 to 15 parts by mass based on 100 parts by mass of the ink (ink composition) other than the extender pigment.

The gloss value G_{A} of the gloss-adjusting layer can be adjusted, for example, by a method to select the type of each of the substances, such as the above-mentioned vehicle, gloss-control resin, and colorant (including an extender pigment), or a method to suitably determine the content of each of the above substances.

Examples of the printing method for forming the gloss-adjusting layer include gravure printing, offset printing, screen printing, flexo printing, electrostatic printing, ink jet printing, etc., similar to the printing method for forming the picture pattern layer mentioned above. Moreover, when a solid-like gloss-adjusting layer is formed on the entire surface, the same coating methods used to form the picture pattern layer can be used.

When the gloss-adjusting layer is formed in part of the front surface (in the case (1)), it is preferable that the gloss-adjusting layer have a picture pattern. In particular, it is more preferable that the gloss-adjusting layer be formed in a pattern shape, such as a dot, lattice, or wood-grain vessel pattern (shape). Because the gloss-adjusting layer is formed in the above pattern, a further difference is made between the gloss of a region in which the gloss-adjusting layer is present and the gloss of a region other than the gloss-adjusting layer (a region in which the gloss-adjusting layer is not present) . As a result, an optical illusion of recesses is generated, and such an optical illusion is recognized as a peculiar cubic effect. Therefore, unevenness (daku) is much less noticeable.

When the picture pattern layer is formed in the decorative sheet, it is preferable that a gloss-adjusting layer be formed so as to be linked (synchronized) with the pattern of the picture pattern layer. For example, when the picture pattern layer is formed in a wood-grain pattern, a decorative sheet having more excellent designability can be obtained by forming a gloss-adjusting layer by pattern-printing of a wood-grain vessel pattern.

The thickness (film thickness) of the gloss-adjusting layer is preferably 0.5 µm to 5 µm, in consideration of printability and interaction with the surface-protecting layer-forming resin composition.

### Back-Surface Primer Layer

A back-surface primer layer may be formed on the back surface (surface opposite to the surface on which the picture pattern layer is laminated) of the base material sheet, as required. The back-surface primer layer is effective, for example, when the base material sheet and an adherend are bonded together to form a decorative plate.

The back-surface primer layer can be formed by applying a known primer agent to the base material sheet. Examples of primer agents include urethane resin primer agents comprising an acrylic-modified urethane resin (an acrylic urethane resin), etc., primer agents comprising a urethane-cellulose resin (e.g., a resin obtained by adding hexamethylene diisocyanate to a mixture of urethane and nitrocellulose), resin primer agents comprising a block copolymer of acrylic and urethane, and the like. Additives may be added to the primer agent, as required. Examples of additives include fillers, such as calcium carbonate and clay, flame retardants, such as magnesium hydroxide, antioxidants, lubricants, foaming agents, ultraviolet absorbers, light stabilizers, etc. The amount of additives can be suitably determined according to product characteristics.

The coating amount of the primer agent is not particularly limited, but is generally about 0.1 to 100 g/m², and preferably about 0.1 to 50 g/m².

The thickness of the back-surface primer layer is not particularly limited, but is generally about 0.01 to 10 µm, and preferably about 0.1 to 1 µm.

### Embossed Shape

The decorative sheet of the general embodiment is embossed from the surface-protecting layer side. The embossing method is not particularly limited. In a preferable method, for example, the front surface of the surface-protecting layer is softened by heating, and pressed and shaped using an embossing plate, followed by cooling. Depending on the material of the decorative sheet, which is a final product, or the surface-protecting layer, for example, the front surface of the transparent resin layer or the gloss-adjusting layer may be softened by heating, and pressed and shaped using an embossing plate, and then a surface-protecting layer may be formed thereon.

The embossing is conducted using a known sheet-fed or rotary embossing machine. Examples of irregular shapes include wood-grain vessel patterns, stone sheet surface concave-convex patterns (granite cleavage planes, etc.), textile surface textures, matte patterns, grain patterns, hairline patterns, linear streak patterns, etc.

In the decorative sheet of the general embodiment, the ten-point average roughness Rzⱼᵢₛ of the surface of the decorative sheet is preferably 60 µm or more, and more preferably 70 µm or more. Further, the ten-point average roughness Rzⱼᵢₛ of the surface of the decorative sheet is preferably 150 µm or less, and more preferably 120 µm or less. The ten-point average roughness Rzⱼᵢₛ can be adjusted within the above range by embossing the decorative sheet from the surface-protecting layer side in the above manner. The resulting decorative sheet thereby has more excellent scratch resistance and designability. In the present specification, the ten-point average roughness Rzⱼᵢₛ in the general embodiment is a value measured by the measurement method according to JIS B0601-2001.

The surface of the decorative sheet preferably has a 60° gloss (gloss value (incident angle: 60°)) of 14 or less, and more preferably 10 or less. The 60° gloss of the surface of the decorative sheet is not particularly limited, but is preferably 3 or more. Because the 60° gloss of the surface of the decorative sheet is within the above range, the resulting decorative sheet has more excellent designability. Even when the decorative sheet is rubbed, the rubbed portion is not noticeable, and the decorative sheet thus has more excellent scratch resistance. In the present specification, the 60° gloss is a value measured along the flow direction of the decorative sheet by a method according to Japanese Industrial Standard JIS Z-8741 using a gloss meter (trade name: GMX-202, produced by Murakami Color Research Laboratory) . The 60° gloss of the surface of the decorative sheet can also be measured by using PG-3D (produced by Nippon Denshoku Industries Co., Ltd.), as with G_{A} and G_{P} mentioned above.

### Decorative Plate

The decorative sheet can be laminated on an adherend to form a decorative plate. The decorative plate can be obtained by laminating the decorative sheet on an adherend so that the surface-protecting layer of the decorative sheet is the outermost surface layer.

The adherend is not limited, and adherends used for known decorative plates can be used. Examples of the adherend include wood-based materials, metal, ceramics, plastics, glass, and the like. In particular, wood-based materials can be preferably used for the decorative sheet. Specific examples of wood-based materials include sliced veneers, single panels, plywood panels, particleboards, medium-density fiberboards (MDF), chipboards, composite base materials in which a chipboard is laminated, and the like formed from various materials, such as Japanese cedar, Japanese cypress, zelkova, pine, lauan, teak, and melapi. Preferred wood-based materials are chipboards or composite base materials in which a chipboard is laminated.

The method for laminating the decorative sheet and an adherend is not limited. For example, the decorative sheet can be bonded to an adherend using an adhesive. The adhesive may be suitably selected from known adhesives depending on the type of adherend, etc. Examples thereof include polyvinyl acetate, polyvinyl chloride, vinyl chloride-vinyl acetate copolymer, ethylene-acrylic acid copolymer, ionomer, butadiene-acrylonitrile rubber, neoprene rubber, natural rubber, and the like. These adhesives can be used singly or in a combination of two or more.

The thus-produced decorative plate can be used, for example, for interior materials of buildings, such as walls, ceilings, and floors; exterior materials, such as balconies and verandas; surface decorative plates of fittings, such as sashes, doors, and balustrades, and furniture; surface decorative plates of cabinets of light electrical appliances and office automation equipment; or the like. In particular, the decorative plate can be preferably used as a floor decorative material.

### 2. Decorative sheet, decorative plate, and processes for producing the same of the present invention

### 1. Decorative Sheet

The decorative sheet of the present invention comprises a base material sheet, and at least a transparent resin layer and a surface-protecting layer sequentially laminated on the base material sheet, and the decorative sheet comprising at least a backer layer laminated on a back surface of the base material sheet, wherein
(1) the surface of the decorative sheet has a ten-point average roughness Rzⱼᵢₛ of 40 µm or more;
(2) the surface-protecting layer contains an ionizing radiation-curable resin;
(3) the base material sheet, the transparent resin layer, and the backer layer each contain a non-halogen-based thermoplastic resin;
(4) the backer layer has a thickness of 120 to 250 µm;
(5) the backer layer has a Martens hardness of 50 to 80 N/mm²; and
(6) the backer layer is laminated by extrusion molding of a backer layer-forming resin composition in a molten state on the back surface of the base material sheet.

In the decorative sheet of the present invention, when the surface roughness of the decorative sheet is within a specific range, the base material sheet, the transparent resin layer, and the surface-protecting layer each contain a specific resin, and a specific backer layer is laminated by extrusion molding (that is, when all of the above requirements (1) to (6) are satisfied), the following effects (a) to (f) can be obtained:
(a) the decorative sheet can be used in Europe and other countries where the regulation of vinyl chloride-based resins has progressed;
(b) when the decorative sheet is bonded to an adherend, such as a chipboard, to form a decorative plate, the appearance of unevenness of the adherend on the surface of the decorative plate is suppressed (*daku*, which follows unevenness of the adherend, is suppressed);
(c) emboss-forming properties are excellent;
(d) embossing collapse is suppressed when the decorative sheet is bonded to an adherend to form a decorative plate;
(e) curling resistance is excellent; and
(f) cracks are not formed on the surface of the decorative sheet, and the decorative sheet can be wound in a roll shape without strain.

The details of each of the layers constituting the decorative sheet of the present invention, and the entire decorative sheet are described in detail below.

In the decorative sheet of the present invention, the layer structure, the resin component constituting each layer, etc., are not particularly limited, as long as at least a transparent resin layer and a surface-protecting layer are sequentially laminated on a base material sheet, at least a backer layer is laminated on the back surface of the base material sheet, and the above requirements (1) to (6) are satisfied. Examples of the layer structure include a decorative sheet in which a color-concealing layer, a picture pattern layer, a transparent adhesive layer, a transparent resin layer, a primer layer, and a surface-protecting layer are sequentially laminated on a base material sheet, and in which a backer layer and a back-surface primer layer are sequentially laminated on the back surface of the base material sheet (this decorative sheet is considered to have a layer structure in which a backer layer, a base material sheet, a color-concealing layer, a picture pattern layer, a transparent adhesive layer, a transparent resin layer, a primer layer, and a surface-protecting layer are sequentially laminated on a back-surface primer layer).

In the present embodiment of the present specification, a direction viewed from the base material sheet where the surface-protecting layer is laminated is referred to as "above" or "the front surface," and a direction viewed from the base material sheet where the backer layer is laminated is referred to as "below" or "the back surface." "The front surface (side)" or "the surface on the surface-protecting layer (side)" of the decorative sheet or the decorative plate means the surface of the decorative sheet or the decorative plate to be viewed after the installation thereof.

### Base Material Sheet

The decorative sheet of the present invention comprises a base material sheet. The base material sheet contains a non-halogen-based thermoplastic resin.
The resin component constituting the base material sheet is preferably a non-halogen-based thermoplastic resin.

The non-halogen-based thermoplastic resin, colorant, and additives used in the base material sheet of the present invention can be the same as those mentioned above in the general embodiment. Moreover, the details of the corona discharge treatment of the base material sheet of the present invention are also the same as those of the general embodiment.

The thickness of the base material sheet is not particularly limited, but is preferably 50 to 100 µm. Because the thickness of the base material sheet is within the above range, the irregularities appearing on the surface of the decorative plate due to unevenness of the adherend can be further suppressed, curliness can be further suppressed when the decorative sheet is stored in a rolled state, and roll laminating can be more appropriately performed.

### Backer Layer

The decorative sheet of the present invention comprises a backer layer on the back surface of the base material sheet. The backer layer as used herein means a buffer layer for absorbing impact, etc., in the decorative sheet (and decorative plate). The backer layer contains a non-halogen-based thermoplastic resin. The resin component constituting the backer layer is preferably a non-halogen-based thermoplastic resin.

Examples of non-halogen-based thermoplastic resins are the same resins exemplified in the base material sheet. The non-halogen-based thermoplastic resins may be used singly or in a combination of two or more. Among the above non-halogen-based thermoplastic resins, olefin-based thermoplastic resins are preferred.

The backer layer may be colored, as with the base material sheet. Examples of the coloring method are the same coloring methods for the base material sheet. Moreover, as with the base material sheet, the backer layer may contain various additives (fillers, matting agents, foaming agents, flame retardants, lubricants, antistatic agents, antioxidants, ultraviolet absorbers, light stabilizers, etc.).

The backer layer is laminated on the back surface of the base material sheet by extrusion molding of a backer layer-forming resin composition in a molten state. Specifically, a backer layer-forming resin composition containing, for example, (1) a resin component (e.g., a non-halogen-based thermoplastic resin) that constitutes the backer layer, and (2) optionally a colorant and various additives mentioned above, is extrusion-molded in a molten state, and the composition is formed into a film and laminated on the back surface of the base material sheet. A backer layer is thereby formed on the back surface of the base material sheet. The backer layer is bonded to the base material sheet by the heat of the resin molten during extrusion molding. In the present invention, the backer layer is laminated by extrusion molding as described above; thus, even when recesses are formed by embossing, etc., on the back surface of the base material sheet, air does not enter the recesses, and the backer layer is laminated on the back surface of the base material sheet with good adhesion. In the present specification, the "molten state" of the resin means a state of the resin that can be molded by "extrusion molding," described later.

Extrusion molding can be performed by a known extrusion molding method. Examples of the method include extrusion molding using a T-die extruder, a cylindrical extruder, or the like. Examples of the T-die include a multi-manifold type T-die and a feed block type T-die.

The thickness of the backer layer is 120 to 250 µm. If the thickness of the backer layer is less than 120 µm, the appearance of unevenness of the adherend on the surface of the decorative plate cannot be sufficiently suppressed. In contrast, if the thickness of the backer layer exceeds 250 µm, curliness occurs when the decorative sheet is stored in a rolled state, thereby making it difficult to perform roll laminating. The thickness of the backer layer can be suitably determined within the above range, depending on the application of the final product, the method of use of the final product, etc., but is preferably 120 to 180 µm.

The Martens hardness of the backer layer is 50 to 80 N/mm². If the Martens hardness of the backer layer is less than 50 N/mm², the appearance of unevenness of the adherend on the surface of the decorative plate cannot be sufficiently suppressed. In contrast, if the Martens hardness of the backer layer exceeds 80 N/mm², cracks are formed on the surface of the decorative sheet when the decorative sheet is stored in a rolled state. The Martens hardness of the backer layer can be suitably determined within the above range, depending on the application of the final product, the method of use of the final product, etc., but is preferably 50 to 60 N/mm².

The Martens hardness of the backer layer can be suitably determined by, for example, 1) suitably selecting a resin component, 2) mixing a plurality of resin components, or 3) adding an elastomer to the resin.

The adhesion surface of the backer layer can be subjected to a known adhesion-enhancing treatment, such as corona discharge treatment, plasma treatment, degreasing treatment, or surface-roughening treatment, as required. Moreover, in consideration of the adhesion with an adherend, a primer layer (back-surface primer layer) may be further provided on the back surface of the backer layer.

The back-surface primer layer can be formed by applying a known primer agent to the backer layer. Examples of primer agents include urethane resin primer agents comprising an acrylic-modified urethane resin (an acrylic urethane resin), etc., primer agents comprising a urethane-cellulose resin (e.g., a resin obtained by adding hexamethylene diisocyanate to a mixture of urethane and nitrocellulose), resin primer agents comprising a block copolymer of acrylic and urethane, and the like. Additives may be added to the primer agent, as required. Examples of additives include fillers, such as calcium carbonate and clay, flame retardants, such as magnesium hydroxide, antioxidants, lubricants, foaming agents, ultraviolet absorbers, light stabilizers, etc. The amount of additives can be suitably determined according to product characteristics.

The coating amount of the primer agent is not particularly limited, but is generally about 0.1 to 100 g/m², and preferably about 0.1 to 50 g/m².

The thickness of the back-surface primer layer is not particularly limited, but is generally about 0.01 to 10 µm, and preferably about 0.1 to 1 µm.

### Picture Pattern Layer

The decorative sheet of the present invention may comprise a picture pattern layer on the base material sheet. The details of the picture pattern layer of the decorative sheet of the present invention are the same as those of the picture pattern layer described above in the general embodiment.

### Color-Concealing Layer

A color-concealing layer may be further formed between the base material sheet and the picture pattern layer, as required. A color-concealing layer is provided in order to conceal the ground color of the adherend, such as a wood-based substrate, from the front surface of the decorative sheet. A color-concealing layer may be formed to stabilize concealing properties not only when the base material sheet is transparent, but also when the base material sheet is concealed by coloring.

The ink for forming the color-concealing layer can be ink that forms the picture pattern layer and that allows concealing by coloring.

The method for forming a color-concealing layer is preferably a method that forms a solid-like color-concealing layer over the entire surface of the base material sheet. Examples of the method include roll coating, knife coating, air-knife coating, dye coating, lip coating, comma coating, kiss coating, flow coating, dip coating, etc., as mentioned above.

The thickness of the color-concealing layer is not particularly limited, and can be suitably determined according to product characteristics; however, the thickness during coating is about 0.2 to 10 µm, and the thickness after drying is about 0.1 to 5 µm.

### Transparent Adhesive Layer

In order to increase the adhesion between the transparent resin layer and the picture pattern layer, a transparent adhesive layer may be formed on the picture pattern layer. The details of the transparent adhesive layer of the decorative sheet of the present invention are the same as those of the transparent adhesive layer described above in the general embodiment.

### Transparent Resin Layer

The decorative sheet of the present invention has a transparent resin layer on the base material sheet. The details of the transparent resin layer of the decorative sheet of the present invention are the same as those of the transparent resin layer described above in the general embodiment.

In the decorative sheet of the present invention, the thickness of the transparent resin layer is preferably about 20 to 200 µm, and more preferably 80 to 120 µm. The thickness of the transparent resin layer may exceed the above range, depending on the application of the decorative sheet, etc.

### Primer Layer

A primer layer may be provided on the transparent resin layer. The details of the primer layer of the decorative sheet of the present invention are the same as those of the primer layer described above in the general embodiment.

### Gloss-Adjusting Layer

The decorative sheet of the present invention may comprise a gloss-adjusting layer. The details of the gloss-adjusting layer of the decorative sheet of the present invention are the same as those of the gloss-adjusting layer described above in the general embodiment.

### Surface-Protecting Layer

The decorative sheet of the present invention has a surface-protecting layer on the transparent resin layer.

When the decorative sheet of the present invention has the gloss-adjusting layer, the surface-protecting layer is formed adjacent to the gloss-adjusting layer. Specifically, the back surface and/or side surface of the surface-protecting layer are/is adjacent to the gloss-adjusting layer. When the decorative sheet of the present invention has the gloss-adjusting layer, the surface-protecting layer is preferably transparent.

The resin component constituting the surface-protecting layer of the decorative sheet of the present invention may be the same resin component used in the surface-protecting layer mentioned above in the general embodiment.

The surface-protecting layer of the decorative sheet of the present invention may contain an ultraviolet absorber, a photoinitiator, an antibacterial agent, and optionally various additives, as described above in the general embodiment. Moreover, the method for forming the surface-protecting layer of the decorative sheet of the present invention is the same method mentioned above in the general embodiment.

The thickness of the surface-protecting layer of the decorative sheet of the present invention is not particularly limited, and can be suitably determined according to the characteristics of the final product; however, it is preferably 0.1 to 50 µm, and more preferably 1 to 30 µm.

### Ten-Point Average Roughness Rzⱼᵢₛ

The ten-point average roughness Rzⱼᵢₛ of the surface (the surface of the surface-protecting layer) of the decorative sheet of the present invention is 40 µm or more. Accordingly, the decorative sheet has excellent designability. The ten-point average roughness Rzⱼᵢₛ is preferably 40 to 120 µm.

In the present invention, the decorative sheet surface having a ten-point average roughness Rzⱼᵢₛ of 40 µm or more can be suitably obtained by performing (applying) embossing, described later. As described later, embossing may be performed (1) on the transparent resin layer or the gloss-adjusting layer, or (2) on the surface-protecting layer.

In the present specification, the ten-point average roughness Rzⱼᵢₛ (µm) in the present invention is a value measured according to JIS B 0601: 2001. Specifically, the ten-point average roughness Rzⱼᵢₛ is determined by extracting only a reference length L from a profile curve in the direction of the mean line thereof, and calculating the sum of the average value of absolute values of altitudes (Yp) of the five highest peaks and the average value of absolute values of altitudes (Yv) of the five lowest valleys over the extracted mean line.

In the present specification, the ten-point average roughness Rzⱼᵢₛ of the decorative sheet of the present invention is determined by the following steps (A) to (C):
(A) First, the decorative sheet is cut into a size of 15 cm x 15 cm.
(B) The surface roughness of the cut decorative sheet is measured by a surface roughness shape measuring apparatus: Surfcom FLEX-50A (Tokyo Seimitsu Co., Ltd.). The surface roughness of the decorative sheet is measured in the following manner. When the embossed pattern is a wood-grain pattern, etc., the surface roughness (measurement distance: 2 cm) is measured in a direction perpendicular to the wood-grain pattern. When the embossed pattern is other than a wood-grain pattern, etc., the surface roughness (measurement distance: 2 cm) is measured in any direction.
(C) Step (B) is performed at any three points to obtain three Rzⱼᵢₛ values, and the minimum valve (lower limit) of the three Rzⱼᵢₛ values is determined. The above requirement (1) of the present invention is regarded as satisfied when the minimum Rzⱼᵢₛ valve is 40 (µm) or more.

The ten-point average roughness Rzⱼᵢₛ can be adjusted, for example, by selecting the depth, shape, etc., of the embossing plate; selecting the outermost surface layer (the surface-protecting layer or the transparent resin layer) to be embossed; setting the heating temperature during embossing and the pressure during pressurization; selecting the resin component constituting the transparent resin layer or the surface-protecting layer; and setting the thickness.

### Embossing

In the present invention, a decorative sheet, the surface of which has a ten-point average roughness Rzⱼᵢₛ of 40 µm or more, is suitably obtained by embossing. In the present specification, the shape formed by embossing is also referred to as an embossed shape (pattern).

The embossed shape may be formed by performing embossing from the transparent resin layer side after the transparent resin layer is formed (process 2 for producing the decorative sheet, described later). Alternatively, the embossed shape may be formed by performing embossing from the surface-protecting layer side after the surface-protecting layer is laminated on the transparent resin layer (process 1 for producing the decorative sheet, described later).

The embossing method is not particularly limited. In a preferable method, for example, the front surface of the transparent resin layer or surface-protecting layer is softened by heating, and pressed and shaped using an embossing plate, followed by cooling. The embossing is conducted using a known sheet-fed or rotary embossing machine. Examples of the embossed shape include embossed patterns (concave-convex patterns of embossed annual rings), wood-grain vessel patterns, stone sheet surface concave-convex patterns (granite cleavage planes, etc.), textile surface textures, matte patterns, grain patterns, hairline patterns, linear streak patterns, etc.

### Rolled Product of the Present Invention

The decorative sheet of the present invention may be wound in a roll shape. That is, in the present invention, a rolled product is obtained by winding the decorative sheet of the present invention in a roll shape. The rolled product of the present invention is a decorative sheet in a round roll shape without strain. There are no cracks on the surface of the decorative sheet in the rolled product. Further, the rolled product of the present invention is prevented from curling even when it is unwound (rolled out). Thus, the decorative sheet of the present invention can be suitably wound in a roll shape, and thus can be easily stored as a rolled product.

The method for winding the decorative sheet of the present invention in a roll shape is not particularly limited. Examples of the method include a method using a winding machine, a winding method by a human, etc. The winding method using a winding machine is also not particularly limited. For example, any of center winding, surface winding, and center-surface winding can be used.

The roll diameter of the rolled product of the present invention is not particularly limited, but is preferably 300 mm to 1,000 mm. Moreover, the width of the rolled product (width of the decorative sheet) is not particularly limited, but is preferably 400 mm to 1,240 mm.

The rolled product of the present invention includes both (1) a rolled product that contains a core material in the center of the round rolled product, and (2) a rolled product that does not contain a core material in the center of the round rolled product. That is, the rolled product of the present invention may have or may not have a core material. The material of the core material is not particularly limited. Examples thereof include paper, wood, metal, resin (e.g., acrylonitrile-butadiene-styrene (ABS), polypropylene (PP), polyethylene (PE), and fiber-reinforced plastic (FRP)), and the like. Moreover, the cross-sectional shape of the core material is not particularly limited, and may be round, square, pentagon, hexagon, or the like. The length of the core material is preferably longer than the width of the rolled product.

### 2. Process 1 for Producing the Decorative Sheet of the Present Invention

The process for producing the decorative sheet of the present invention (production process 1) is a process for producing a decorative sheet comprising a base material sheet, and at least a transparent resin layer and a surface-protecting layer sequentially laminated on the base material sheet, and the decorative sheet comprising at least a backer layer laminated on a back surface of the base material sheet, the process sequentially comprising the following steps 1 to 3:
(i) step 1 of obtaining a laminated sheet sequentially having at least a transparent resin layer and a surface-protecting layer on a base material sheet,
   the surface-protecting layer containing an ionizing radiation-curable resin, and
   the base material sheet and the transparent resin layer each containing a non-halogen-based thermoplastic resin;
(ii) step 2 of performing embossing from the surface-protecting layer of the laminated sheet so that the surface of the laminated sheet has a ten-point average roughness Rzⱼᵢₛ of 40 µm or more; and
(iii) step 3 of laminating a backer layer by extrusion molding of a backer layer-forming resin composition in a molten state on the back surface of the base material sheet,
the backer layer containing a non-halogen-based thermoplastic resin,
the backer layer having a thickness of 120 to 250 µm, and
the backer layer having a Martens hardness of 50 to 80 N/mm².
The decorative sheet of the present invention can be suitably obtained by this production process.

In step 1, a laminated sheet sequentially having at least a transparent resin layer and a surface-protecting layer on a base material sheet is obtained. The laminated sheet is an intermediate of the decorative sheet of the present invention, and does not have a backer layer. The details of the base material sheet, transparent resin layer, and surface-protecting layer in the laminated sheet are the same as the explanation of the base material sheet, transparent resin layer, and surface-protecting layer in the above section "1. Decorative Sheet of the Present Invention."

When the laminated sheet is obtained in step 1, a color-concealing layer, a picture pattern layer, a transparent adhesive layer, a primer layer, a gloss-adjusting layer, etc., may be formed, as required. The details of each layer are the same as the explanation of the color-concealing layer, picture pattern layer, transparent adhesive layer, primer layer, and gloss-adjusting layer in the above section "1. Decorative Sheet "of the Present Invention.

In step 2, embossing is performed from the surface-protecting layer of the laminated sheet so that the surface of the laminated sheet has a ten-point average roughness Rzⱼᵢₛ of 40 µm or more (thereby obtaining a laminated sheet, the surface of which has a ten-point average roughness Rzⱼis of 40 µm or more) . The details of the embossing and the ten-point average roughness Rzⱼᵢₛ of the surface of the laminated sheet are the same as those of the embossing and the ten-point average roughness Rzⱼᵢₛ in the above section "1. Decorative Sheet" of the Present Invention.

In step 3, a backer layer is laminated on the back surface of the base material sheet by extrusion molding of a backer layer-forming resin composition in a molten state on the back surface of the base material sheet. The details of the backer layer and the step of extrusion-molding the backer layer-forming resin composition are the same as the explanation of the backer layer in the above section "1. Decorative Sheet" of the Present Invention. After the backer layer is formed, a back-surface primer layer, mentioned above, may be formed, as required. The details of the back-surface primer layer are the same as the explanation of the back-surface primer layer in the above section "1. Decorative Sheet" of the Present Invention.

### 3. Process 2 for Producing the Decorative Sheet of the Present Invention

The process for producing the decorative sheet of the present invention (production process 2) is a process for producing a decorative sheet comprising a base material sheet, and at least a transparent resin layer and a surface-protecting layer sequentially laminated on the base material sheet, and the decorative sheet comprising at least a backer layer laminated on a back surface of the base material sheet, the process sequentially comprising the following steps 1 to 4:
(i) step 1 of obtaining a laminate having at least a transparent resin layer on a base material sheet,
   the base material sheet and the transparent resin layer each containing a non-halogen-based thermoplastic resin;
(ii) step 2 of performing embossing from the transparent resin layer of the laminate;
(iii) step 3 of obtaining a laminated sheet having at least the transparent resin layer and a surface-protecting layer on the base material sheet by applying a surface-protecting layer-forming resin composition containing an ionizing radiation-curable resin to the transparent resin layer,
   the surface of the laminated sheet having a ten-point average roughness Rzⱼis of 40 µm or more; and
(iv) step 4 of laminating a backer layer by extrusion molding of a backer layer-forming resin composition in a molten state on the back surface of the base material sheet,
the backer layer containing a non-halogen-based thermoplastic resin,
the backer layer having a thickness of 120 to 250 µm, and
the backer layer having a Martens hardness of 50 to 80 N/mm².
The decorative sheet of the present invention can be suitably obtained by this production process.

In step 1, a laminate having at least a transparent resin layer on a base material sheet is obtained. The laminate is an intermediate of the decorative sheet of the present invention, and is also an intermediate of a laminated sheet, described later. The laminate does not have a backer layer or a surface-protecting layer. The details of the base material sheet and the transparent resin layer in the laminate are the same as the explanation of the base material sheet and the transparent resin layer in the above section "1. Decorative Sheet" of the Present Invention.

When the laminate is obtained in step 1, a color-concealing layer, a picture pattern layer, a transparent adhesive layer, a primer layer, a gloss-adjusting layer, etc., may be formed, as required. The details of each layer are the same as the explanation of the color-concealing layer, picture pattern layer, transparent adhesive layer, primer layer, and gloss-adjusting layer in the above section "1. Decorative Sheet" of the Present Invention.

In step 2, embossing is performed from the transparent resin layer of the laminate. The ten-point average roughness Rzⱼᵢₛ of the surface of the laminate (due to the embossed shape) obtained in step 2 is not particularly limited. Embossing may be performed from the transparent resin layer so that the ten-point average roughness Rzⱼᵢₛ of the surface of the laminated sheet or the decorative sheet is 40 µm or more after steps 3 and 4, described later.

In step 3, a surface-protecting layer-forming resin composition containing an ionizing radiation-curable resin is applied to the transparent resin layer to thereby obtain a laminated sheet, the surface of which has a ten-point average roughness Rzⱼᵢₛ of 40 µm or more. The details of the surface-protecting layer and the step of applying the surface-protecting layer-forming resin composition are the same as the explanation of the surface-protecting layer in the above section "1. Decorative Sheet" of the Present Invention. The laminated sheet is an intermediate of the decorative sheet of the present invention, and does not have a backer layer.

Before applying the surface-protecting layer-forming resin composition in step 3, a primer layer, a gloss-adjusting layer, etc., may be formed, as required. The details of each layer are the same as the explanation of the primer layer and gloss-adjusting layer in the above section "1. Decorative Sheet" of the Present Invention.

In step 4, a backer layer is laminated on the back surface of the base material sheet by extrusion molding of a backer layer-forming resin composition in a molten state on the back surface of the base material sheet. The details of the backer layer and the step of extrusion-molding the backer layer-forming resin composition are the same as the explanation of the backer layer in the above section "1. Decorative Sheet" of the Present Invention. After the backer layer is formed, a back-surface primer layer, mentioned above, may be formed, as required. The details of the back-surface primer layer are the same as the explanation of the back-surface primer layer in the above section "1. Decorative Sheet" of the Present Invention.

### 4. Decorative Plate of the Present Invention and Process for Producing the Same

The decorative sheet of the present invention can be laminated on an adherend to form a decorative plate. Moreover, the decorative sheet obtained by unwinding the rolled product of the present invention can be laminated on an adherend to form a decorative plate. The decorative plate of the present invention is obtained by laminating the decorative sheet of the present invention on an adherend so that the surface-protecting layer of the decorative sheet of the present invention is the uppermost surface layer.

The adherend is not limited, and adherends used for known decorative plates can be used. Examples of the adherend include wood-based materials, metal, ceramics, plastics, glass, and the like. In particular, wood-based materials can be preferably used for the decorative sheet of the present invention. Specific examples of wood-based materials include sliced veneers, single panels, plywood panels, particleboards, medium-density fiberboards (MDF), chipboards, composite base materials in which a chipboard is laminated, and the like formed from various materials, such as Japanese cedar, Japanese cypress, zelkova, pine, lauan, teak, and melapi. Preferred wood-based materials are chipboards or composite base materials in which a chipboard is laminated.

The method for laminating the decorative sheet and an adherend is not limited. For example, the decorative sheet can be bonded to an adherend using an adhesive. The adhesive may be suitably selected from known adhesives depending on the type of adherend, etc. Examples thereof include polyvinyl acetate, polyvinyl chloride, vinyl chloride-vinyl acetate copolymer, ethylene-acrylic acid copolymer, ionomer, butadiene-acrylonitrile rubber, neoprene rubber, natural rubber, and the like. These adhesives can be used singly or in a combination of two or more.

The thus-produced decorative plate can be used, for example, for interior materials of buildings, such as walls, ceilings, and floors; exterior materials, such as balconies and verandas; surface decorative plates of fittings, such as sashes, doors, and balustrades, and furniture; surface decorative plates of cabinets of light electrical appliances and office automation equipment; or the like. In particular, the decorative plate can be preferably used as a floor decorative material.

### Examples

The present invention is explained in detail below with reference to Examples and Comparative Examples. However, the present invention is not limited to these Examples.

### Examples of the general embodiment

N.B. the examples of the general embodiment are not to be considered examples of the invention.

### Example 1 (Decorative sheet having two base material sheets)

A 60-µm-thick polypropylene film (Artply, produced by Mitsubishi Plastics Industries, Ltd.) was prepared as a base material sheet 1. A 2-µm-thick picture pattern layer was formed by gravure printing on the front surface of the polypropylene film. A 2-µm-thick adhesive layer comprising a urethane-based resin (Seika Bond E-263/C-75N, produced by Dainichiseika Color & Chemicals Mfg. Co., Ltd.) was formed on the picture pattern layer. A 100-µm-thick transparent polypropylene resin sheet (Novatec PP, produced by Japan Polypropylene Corporation) was laminated on the adhesive layer by an extrusion lamination method, thereby forming a transparent resin layer.

Subsequently, the surface was subjected to a corona discharge treatment, and then coated with a two-component curable urethane-based resin, thereby forming a primer layer (surface-protecting layer-forming primer layer; thickness: 2 µm).

The front surface of the primer layer was coated with a urethane acrylate-based electron beam-curable resin (EB resin) by a gravure coating method so that the thickness (layer thickness) after curing was 15 µm. Then, the electron beam-curable resin was cured by irradiation with an electron beam using an electron beam irradiation device in an environment with an oxygen concentration of 200 ppm or less at an acceleration voltage of 175 KeV with a dose of 5 Mrad, thereby forming a surface-protecting layer.

The electron beam-curable resin contained, as silica fine particles A having a particle size equal to or less than the coating-film thickness, fine particles 1 (particle size: 6 to 8 µm) shown in Table 10 in an amount of 30 parts by mass based on 100 parts by mass of the electron beam-curable resin, and as silica fine particles B having a particle size greater than the coaling film thickness, fine particles 2 (particle size: 18 to 20 µm) shown in Table 10 in an amount of 5 parts by mass based on 100 parts by mass of the electron beam-curable resin.

The proportion of the electron beam-curable resin is as follows:
- Bifunctional urethane acrylate (Tg = 25 (°C), molecular weight: 1,500): 80 parts by mass
- Hexafunctional urethane acrylate (Tg = 200 (°C) or more, molecular weight: 1,500): 20 parts by mass

The surface-protecting layer formed in the above manner was heated with a non-contact type infrared heater to thereby soften the base material sheet 1 and the transparent resin layer, and embossing was immediately conducted by heat and pressure to form a wood-grain irregular pattern (wood-grain pattern 1) on the surface-protecting layer.

Finally, a resin layer made of a polypropylene resin was laminated on the back surface of the base material sheet 1 by a melt-extrusion lamination method to thereby form a backer layer as a base material sheet 2. Further, the back surface of the backer layer was subjected to a corona discharge treatment, and then a back-surface primer layer (thickness: 2 µm) was formed to prepare a decorative sheet. The thickness of the backer layer was 120 µm, and the Martens hardness (measured in the cross-sectional direction of the backer layer) was 50 to 60 N/mm². The ten-point average roughness Rzⱼᵢₛ (measurement distance: 2 cm) of the surface of the decorative sheet, on which the irregular pattern was formed, was 71 µm. Moreover, when the gloss value (incident angle: 60°) of the surface-protecting layer was measured by using PG-3D (produced by Nippon Denshoku Industries Co., Ltd.), the gloss value (G_{P}) was 13.

### Examples 2 to 10 and Comparative Examples 1 to 12

Decorative sheets of Examples 2 to 10 and Comparative Examples 1 to 12 were prepared in the same manner as in Example 1, except that the surface-protecting layer, the contents of the fine particles A and B, the structure of the transparent resin layer and the base material sheets, and the embossed shape were changed as shown in Tables 1 to 5.

### Examples 11 and 12 (Reference Examples) and Comparative Examples 13 to 16 (Decorative sheet having a single base material sheet)

Decorative sheets of Examples 11 and 12 and Comparative Examples 13 to 16 were prepared in the same manner as in Example 1, except that a backer layer was not formed as the base material sheet 2, and the surface-protecting layer, the contents of the fine particles A and B, the structures of the transparent resin layer and the base material sheet, and the embossed shape were changed as shown in Table 5.

### Example 13

First, base material sheets, a picture pattern layer, an adhesive layer, a transparent resin layer, and a primer layer were formed. Each layer was formed in the same manner as in Example 1.

Next, a patterned gloss-adjusting layer was formed on the front surface of the primer layer so that the ratio of the area of the gloss-adjusting layer per cm² of the surface of the decorative sheet on the surface-protecting layer side was 50% (the occupancy area ratio of the gloss-adjusting layer when viewed from the front surface of the finally produced decorative sheet was 50%). The gloss-adjusting layer was formed by applying matte ink (a printing ink composition containing 10 parts by mass of silica particles based on 100 parts by mass of polyester urethane-based printing ink having a number average molecular weight of 3,000 and a glass transition temperature (Tg) of - 62.8°C) in a wood grain vessel pattern by a gravure printing method so that the thickness of the gloss-adjusting layer after drying was 2 µm.

Subsequently, a surface-protecting layer was formed on the entire surface of the gloss-adjusting layer, and then an embossed pattern was further formed on the surface-protecting layer side. The surface-protecting layer and the embossed pattern were each formed in the same manner as in Example 1. Next, a backer layer was formed as the base material sheet 2 on the back surface of the base material sheet, and then a back-surface primer layer was further formed on the back surface of the backer layer. The backer layer and the back-surface primer layer were each formed in the same manner as in Example 1.

A decorative sheet of Example 13 was obtained in this manner.

The gloss value (G_{A}) measured when the gloss-adjusting layer was irradiated with light at an incident angle of 60° before applying the surface-protecting layer-forming resin composition was 2. Separately from the above decorative sheet, a decorative sheet that was the same as the decorative sheet of Example 13, except that a gloss-adjusting layer was not formed, was prepared for measuring the gloss value of the surface-protecting layer. The gloss value (G_{P}) measured when the surface-protecting layer of the decorative sheet for measurement was irradiated with light at an incident angle of 60° was 13. The gloss values (incident angle: 60°) of the gloss-adjusting layer and the surface-protecting layer in the decorative sheet of Example 13 were determined by the above respective gloss values. The gloss values (incident angle: 60°) were measured by using PG-3D (produced by Nippon Denshoku Industries Co., Ltd.).

### Example 14

First, base material sheets, a picture pattern layer, an adhesive layer, a transparent resin layer, and a primer layer were formed. Each layer was formed in the same manner as in Example 1.

Then, a gloss-adjusting layer (thickness after drying: 2 µm) was formed on the entire front surface of the primer layer. In the formation of the gloss-adjusting layer, the same ink as the matte ink used in Example 13 was used.

Next, a patterned surface-protecting layer was formed on the gloss-adjusting layer so that the ratio of the area of the surface-protecting layer per cm² of the surface of the decorative sheet on the surface-protecting layer side was 30% (the ratio of the area of a region in which the gloss-adjusting layer was exposed (the exposure area ratio of the less-gloss layer) was 70%). In the formation of the surface-protecting layer, the same resin composition as the surface-protecting layer-forming resin composition used in Example 1 was used. Curing of the electron beam-curable resin was also performed in the same manner as in Example 1.

Subsequently, an embossed pattern was formed on the surface-protecting layer side. The embossed pattern was formed in the same manner as in Example 1.

Then, a backer layer was formed as the base material sheet 2 on the back surface of the base material sheet, and then a back-surface primer layer was further formed on the back surface of the backer layer. The backer layer and the back-surface primer layer were each formed in the same manner as in Example 1.

A decorative sheet of Example 14 was obtained in this manner.

The gloss value (G_{A}) measured when the gloss-adjusting layer was irradiated with light at an incident angle of 60° before applying the surface-protecting layer-forming resin composition was 2. Separately from the above decorative sheet, a decorative sheet that was the same as the decorative sheet of Example 14, except that a gloss-adjusting layer was not formed, was prepared for measuring the gloss value of the surface-protecting layer. The gloss value (G_{P}) measured when the surface-protecting layer of the decorative sheet for measurement was irradiated with light at an incident angle of 60° was 13. The gloss values (incident angle: 60°) of the gloss-adjusting layer and the surface-protecting layer in the decorative sheet of Example 14 were determined by the above respective gloss values. The gloss values (incident angle: 60°) were measured by using PG-3D (produced by Nippon Denshoku Industries Co., Ltd.).

### Examples 15 to 21

Fine particles 1 to 6 shown in Table 10 were used as the fine particles used in the surface-protecting layer. Further, the embossed pattern of the embossed shape was changed to wood-grain patterns 1 to 5 shown in Table 11. Decorative sheets of Examples 15 to 21 were prepared in the same manner as in Example 1, except that the surface-protecting layer, the contents of the fine particles, and the embossed shape were changed as shown in Tables 7 to 9.

The decorative sheets of the Examples and the Comparative Examples prepared as described above, and decorative plates prepared in the following manner using these decorative sheets were evaluated for the following evaluation items by the following evaluation methods. In the following evaluation methods, the term *"shakkaku"* (Japanese unit of measurement) refers to the area of a plane represented by a 303 mm x 303 mm square.

### Evaluation method

### Surface state of decorative plate - 1 (evaluation of suppression of appearance of surface unevenness of adherend)

An aqueous emulsion adhesive (Rikabond BA-10L (main agent): BA-11B (curing agent), produced by Chirika Co., Ltd.) was applied to a corkboard in an amount of 6 to 7 *g*/*shakkaku,* and a decorative sheet was laminated thereon, followed by curing at room temperature for three days, thereby producing a decorative plate. The surface state of the decorative plate was visually observed, and evaluated according to the following evaluation criteria. In the following evaluation criteria, an evaluation of A or higher indicates that the surface state is unproblematic in practical use.
A: Unevenness of the adherend does not appear.
B: Unevenness of the adherend slightly appears.
C: Unevenness of the adherend clearly appears.

### Embossed state of decorative sheet (evaluation of emboss-forming properties)

The state of the embossed pattern of the decorative sheet was visually observed, and evaluated according to the following evaluation criteria. In the following evaluation criteria, an evaluation of A or higher indicates that the embossed state is unproblematic in practical use.
A: The embossed pattern clearly remains.
B: The embossed pattern slightly disappears.
C: The embossed pattern almost disappears.

### Embossed state of decorative plate (evaluation of embossing collapse)

The embossed state of the decorative plate, i.e., embossing collapse after lamination of the decorative sheet on an adherend, was evaluated. Specifically, an aqueous emulsion adhesive (Rikabond BA-10L (main agent): BA-11B (curing agent), produced by Chirika Co., Ltd.) was applied to a particle board in an amount of 6 to 7 *g*/*shakkaku,* and a decorative sheet was laminated thereon, followed by curing at room temperature for three days, thereby producing a decorative plate. The embossed state of the decorative plate was visually observed, and evaluated according to the following evaluation criteria. In the following evaluation criteria, an evaluation of B or higher indicates that the embossed state is unproblematic in practical use.
A: The embossed pattern is not collapsed.
B: The embossed pattern is slightly collapsed.
C: The embossed pattern is almost collapsed.

### Curling resistance of decorative sheet

The decorative sheet was wound around a paper tube (diameter: 3 inches), and allowed to stand at room temperature for one week. The decorative sheet was unwound, and the state of curling was visually observed and evaluated according to the following evaluation criteria. In the following evaluation criteria, an evaluation of A or higher indicates that the curling resistance is unproblematic in practical use.
A: The decorative sheet is hardly curled.
B: The decorative sheet is slightly curled.
C: The decorative sheet is clearly curled.

### Static pressure load resistance (evaluation of gloss appearance under static pressure load conditions)

An aqueous emulsion adhesive (Rikabond BA-10L (main agent): BA-11B (curing agent), produced by Chirika Co., Ltd.) was applied to an MDF substrate (4 cm x 4 cm) in an amount of 6 to 7 *g*/*shakkaku,* and a decorative sheet was laminated thereon, followed by curing at room temperature for three days, thereby producing a decorative plate. A load of 5 kg/cm² (80 kg on 4 cm x 4 cm) was applied to the surface of the decorative plate (decorative sheet side) for 24 hours. Then, the gloss change on the surface of the decorative plate was visually observed, and evaluated according to the following evaluation criteria. In the following evaluation criteria, an evaluation of B or higher indicates that the static pressure load resistance is unproblematic in practical use, and that gloss appearance can be suppressed even when the decorative plate is used under conditions where a static pressure load is applied.
A: Gloss does not change.
B: Gloss slightly changes.
C: Gloss clearly changes.

### Micro-scratch test

The following tests were conducted using a Martindale tester (produced by James Heal).

### - Gloss test (A test)

The surface of the decorative sheet was polished with an abrasive material (Scotch-Brite Fleece SB7447, produced by Sumitomo 3M Limited). Specifically, a test was conducted by polishing the surface of the decorative sheet with the round Scotch-Brite (diameter: 9 cm) at a load of 6 N (load: 9 g/cm²) at a rotational frequency of 80 (5 Lissajous orbits). The rate of change in the 60° gloss value before and after the test was measured and evaluated according to the following evaluation criteria. In the following evaluation criteria, an evaluation B or higher indicates unproblematic practical use.
A: The rate of change in the gloss value is less than 20%.
B: The rate of change in the gloss value is 20% or more and less than 30%.
C: The rate of change in the gloss value is 30% or more.

### - Scratch test (B test)

The surface of the decorative sheet was polished with an abrasive material (Scotch-Brite Fleece SB7440, produced by Sumitomo 3M Limited). Specifically, a test was conducted by polishing the surface of the decorative sheet with the round Scotch-Brite (diameter: 9 cm) at a load of 4 N (load: 6 g/cm²) at a rotational frequency of 160 (10 Lissajous orbits). Scratches on the surface of the decorative sheet after the test were visually observed and evaluated according to the following evaluation criteria. In the following evaluation criteria, an evaluation of B or higher indicates that the scratch resistance is unproblematic in practical use.
A+: No scratches are found on the surface of the decorative sheet.
A: A few scratches are found on the surface of the decorative sheet.
B: Many scratches are found on the surface of the decorative sheet.
C: A great number of scratches are found on the surface of the decorative sheet.

### Surface state of decorative plate - 2 (evaluation of suppression of appearance of surface unevenness of adherend having greater surface roughness)

An adherend having a surface roughness greater than that of a corkboard (an adherend having a surface roughness Rz at least two times greater than that of a general adherend) was prepared. Next, an aqueous emulsion adhesive (Rikabond BA-10L (main agent): BA-11B (curing agent), produced by Chirika Co., Ltd.) was applied to the adherend in an amount of 6 to 7 *g*/*shakkaku,* and the decorative sheets of Examples 1, 13, and 14 were each laminated thereon, followed by curing at room temperature for three days, thereby producing decorative plates. The surface state of each decorative plate was visually observed, and evaluated according to the following evaluation criteria. In the following evaluation criteria, an evaluation of B or higher indicates that the surface state is unproblematic in practical use.
A+: Unevenness of the adherend does not appear.
A: Unevenness of the adherend barely appears.
B: Unevenness of the adherend slightly appears.
C: Unevenness of the adherend appears more clearly than in evaluation B above.

### Evaluation of designability of decorative sheet

First, decorative plates were produced in the same manner as described in "Surface state of decorative plate - 2" above. Then, the appearance of each decorative plate was observed by 20 adult men and women, and whether a wooden texture was expressed was evaluated according to the following evaluation criteria. In the following evaluation criteria, an evaluation of B or higher indicates that the surface state is unproblematic in practical use.
A+: 90% or more of adult men and women determined that a wooden texture was expressed.
A: 70% or more of adult men and women determined that a wooden texture was expressed.
B: 50% or more of adult men and women determined that a wooden texture was expressed.
C: Less than 50% of adult men and women determined that a wooden texture was expressed.

### Hoffman scratch test (evaluation of light-load scratch resistance)

A test was conducted using a Hoffman scratch tester (produced by BYK-Gardner, U.S.A.) Specifically, a scratch knife (7-diameter cylindrical knife) was set to be in contact with the surface of the decorative sheet at an angle of 45°, and the tester was moved on the decorative plate. The load (spindle) was gradually increased, and the test was repeated until scratches, impressions, etc., were formed on the surface of the decorative sheet for floor. The results were evaluated according to the following evaluation criteria. In the following evaluation criteria, an evaluation of B or higher indicates that the light-load scratch resistance is unproblematic in practical use.
A+: No scratches are found at a load of 500 g or more.
A: No scratches are found at a load of 400 g or more and less than 500 g.
B: No scratches are found at a load of 300 g or more and less than 400 g.
C: Scratches are formed at a load of less than 300 g.

The following Tables 1 to 9 show the results for the general embodiment. N.B.: the examples of the general embodiment are not to be considered examples of the invention.

**Table 1**

| | | Comparative Example 1 | Comparative Example 2 | Comparative Example 3 |
|---|---|---|---|---|
| Embossed shape | Embossed pattern | Wood-grain pattern 1 | Wood-grain pattern 1 | Wood-grain pattern 1 |
| | Ten-point average roughness Rzⱼᵢₛ (µm) | 71 | 71 | 71 |
| Surface-protecting layer | Thickness (µm) | 15 | 15 | 15 |
| | Fine particles 1 (part by mass) | 40 | 20 | 0 |
| | Fine particles 2 (part by mass) | 0 | 20 | 40 |
| Transparent resin layer | Type | PP resin | PP resin | PP resin |
| | Martens hardness (N/mm²) | 30-40 | 30-40 | 30-40 |
| | Thickness (µm) | 100 | 100 | 100 |
| Base material sheet 1 | Type | PP resin A | PP resin A | PP resin A |
| | Martens hardness (N/mm²) | 30-40 | 30-40 | 30-40 |
| | Thickness (µm) | 60 | 60 | 60 |
| Base material sheet 2 (Backer layer) | Type | PP resin B | PP resin B | PP resin B |
| | Martens hardness (N/mm²) | 50-60 | 50-60 | 50-60 |
| | Thickness (µm) | 120 | 120 | 120 |
| Surface state of decorative plate (suppression of appearance of surface unevenness) | | A | A | A |
| Embossed state of decorative sheet (emboss-forming properties) | | A | A | A |
| Embossed state of decorative plate (embossing collapse) | | A | A | A |
| Curling resistance of decorative sheet | | A | A | A |
| Static pressure load resistance (gloss appearance under static pressure conditions) | | C | C | C |
| Micro-scratch test | Gloss test (A test) | C | C | C |
| | Scratch test (B test) | C | B | C |

**Table 2**

| | | Comparative Example 4 | Example 1 | Example 2 | Example 3 | Example 4 | Example 5 | Comparative Example 5 |
|---|---|---|---|---|---|---|---|---|
| Embossed shape | Embossed pattern | Wood-grain pattern 1 | Wood-grain pattern 1 | Wood-grain pattern 1 | Wood-grain pattern 1 | Wood-grain pattern 1 | Wood-grain pattern 1 | Wood-grain pattern 1 |
| | Ten-point average roughness Rzⱼᵢₛ (µm) | 71 | 71 | 71 | 71 | 71 | 71 | 71 |
| Surface-protecting layer | Thickness (µm) | 15 | 15 | 15 | 15 | 15 | 15 | 15 |
| | Fine particles 1 (part by mass) | 35 | 30 | 20 | 17.5 | 15 | 5 | 0 |
| | Fine particles 2 (part by mass) | 0 | 5 | 15 | 17.5 | 20 | 30 | 35 |
| Transparent resin layer | Type | PP resin | PP resin | PP resin | PP resin | PP resin | PP resin | PP resin |
| | Martens hardness (N/mm²) | 30-40 | 30-40 | 30-40 | 30-40 | 30-40 | 30-40 | 30-40 |
| | Thickness (µm) | 100 | 100 | 100 | 100 | 100 | 100 | 100 |
| Base material sheet 1 | Type | PP resin A | PP resin A | PP resin A | PP resin A | PP resin A | PP resin A | PP resin A |
| | Martens hardness (N/mm²) | 30-40 | 30-40 | 30-40 | 30-40 | 30-40 | 30-40 | 30-40 |
| | Thickness (µm) | 60 | 60 | 60 | 60 | 60 | 60 | 60 |
| Base material sheet 2 (Backer layer) | Type | PP resin B | PP resin B | PP resin B | PP resin B | PP resin B | PP resin B | PP resin B |
| | Martens hardness (N/mm²) | 50-60 | 50-60 | 50-60 | 50-60 | 50-60 | 50-60 | 50-60 |
| | Thickness (µm) | 120 | 120 | 120 | 120 | 120 | 120 | 120 |
| Surface state of decorative plate (suppression of appearance of surface unevenness) | | A | A | A | A | A | A | A |
| Embossed state of decorative sheet (emboss-forming properties) | | A | A | A | A | A | A | A |
| Embossed state of decorative plate (embossing collapse) | | A | A | A | A | A | A | A |
| Curling resistance of decorative sheet | | A | A | A | A | A | A | A |
| Static pressure load resistance (gloss appearance under static pressure conditions) | | A | A | A | A | A | B | C |
| Micro-scratch test | Gloss test (A test) | A | A | A | A | A | B | C |
| | Scratch test (B test) | C | B | A | A+ | A | A | A |

**Table 3**

| | | | Comparative Example 6 | Example 6 | Example 7 | Example 8 | Comparative Example 7 | Comparative Example 8 | Comparative Example 9 | Comparative Example 10 |
|---|---|---|---|---|---|---|---|---|---|---|
| Embossed shape | Embossed pattern | | Wood-grain pattern 1 | Wood-grain pattern 1 | Wood-grain pattern 1 | Wood-grain pattern 1 | Wood-grain pattern 1 | Wood-grain pattern 1 | Wood-grain pattern 1 | Wood-grain pattern 2 |
| | Ten-point average roughness Rzⱼᵢₛ (µm) | | 71 | 71 | 71 | 71 | 71 | 71 | 71 | 71 |
| Surface-protecting layer | Thickness (µm) | | 15 | 15 | 15 | 15 | 15 | 15 | 15 | 15 |
| | Fine particles 1 (part by mass) | | 15 | 10 | 7.5 | 5 | 0 | 10 | 5 | 0 |
| | Fine particles 2 (part by mass) | | 0 | 5 | 7.5 | 10 | 15 | 0 | 5 | 10 |
| Transparent resin layer | Type | | PP resin | PP resin | PP resin | PP resin | PP resin | PP resin | PP resin | PP resin |
| | Martens hardness (N/mm²) | | 30-40 | 30-40 | 30-40 | 30-40 | 30-40 | 30-40 | 30-40 | 30-40 |
| | Thickness (µm) | | 100 | 100 | 100 | 100 | 100 | 100 | 100 | 100 |
| Base material sheet 1 | Type | | PP resin A | PP resin A | PP resin A | PP resin A | PP resin A | PP resin A | PP resin A | PP resin A |
| | Martens hardness (N/mm²) | | 30-40 | 30-40 | 30-40 | 30-40 | 30-40 | 30-40 | 30-40 | 30-40 |
| | Thickness (µm) | | 60 | 60 | 60 | 60 | 60 | 60 | 60 | 60 |
| Base material sheet 2 (Backer layer) | Type | | PP resin B | PP resin B | PP resin B | PP resin B | PP resin B | PP resin B | PP resin B | PP resin B |
| | Martens hardness (N/mm²) | | 50-60 | 50-60 | 50-60 | 50-60 | 50-60 | 50-60 | 50-60 | 50-60 |
| | Thickness (µm) | | 120 | 120 | 120 | 120 | 120 | 120 | 120 | 120 |
| Surface state of decorative plate (suppression of appearance of surface unevenness) | | | A | A | A | A | A | A | A | A |
| Embossed state of decorative sheet (emboss-forming properties) | | | A | A | A | A | A | A | A | A |
| Embossed state of decorative plate (embossing collapse) | | | A | A | A | A | A | A | A | A |
| Curling resistance of decorative sheet | | | A | A | A | A | A | A | A | A |
| Static pressure load resistance (gloss appearance under static pressure conditions) | | | A | A | A | B | C | C | C | C |
| Micro-scratch test | | Gloss test (A test) | A | A | A | B | C | C | C | C |
| | | Scratch test (B test) | C | B | A+ | A | A | C | C | C |

**Table 4**

| | | Comparative Example 11 | Comparative Example 12 | Example 9 |
|---|---|---|---|---|
| Embossed shape | Embossed pattern | Wood-grain pattern 1 | Wood-grain pattern 1 | Wood-grain pattern 2 |
| | Ten-point average roughness Rzⱼᵢₛ (µm) | 71 | 71 | 60 |
| Surface-protecting layer | Thickness (µm) | 5 | 35 | 15 |
| | Fine particles 1 (part by mass) | 17.5 | 17.5 | 17.5 |
| | Fine particles 2 (part by mass) | 17.5 | 17.5 | 17.5 |
| Transparent resin layer | Type | PP resin | PP resin | PP resin |
| | Martens hardness (N/mm²) | 30-40 | 30-40 | 30-40 |
| | Thickness (µm) | 100 | 100 | 100 |
| Base material sheet 1 | Type | PP resin A | PP resin A | PP resin A |
| | Martens hardness (N/mm²) | 30-40 | 30-40 | 30-40 |
| | Thickness (µm) | 60 | 60 | 60 |
| Base material sheet 2 (Backer layer) | Type | PP resin B | PP resin B | PP resin B |
| | Martens hardness (N/mm²) | 50-60 | 50-60 | 50-60 |
| | Thickness (µm) | 120 | 120 | 120 |
| Surface state of decorative plate (suppression of appearance of surface unevenness) | | A | A | A |
| Embossed state of decorative sheet (emboss-forming properties) | | A | B | A |
| Embossed state of decorative plate (embossing collapse) | | A | A | B |
| Curling resistance of decorative sheet | | A | A | A |
| Static pressure load resistance (gloss appearance under static pressure conditions) | | A | A | A |
| Micro-scratch test | Gloss test (A test) | A | A | A |
| | Scratch test (B test) | C | B | A+ |

**Table 5**

| | | Example 10 | Example 11* | Example 12* | Comparative Example 13 | Comparative Example 14 | Comparative Example 15 | Comparative Example 16 |
|---|---|---|---|---|---|---|---|---|
| Embossed shape | Embossed pattern | Wood-grain pattern 1 | Wood-grain pattern 1 | Wood-grain pattern 1 | Wood-grain pattern 1 | Wood-grain pattern 1 | Wood-grain pattern 1 | Wood-grain pattern 1 |
| | Ten-point average roughness Rzⱼᵢₛ (µm) | 71 | 71 | 71 | 71 | 71 | 71 | 71 |
| Surface-protecting layer | Thickness (µm) | 15 | 15 | 15 | 15 | 15 | 15 | 15 |
| | Fine particles 1 (part by mass) | 17.5 | 17.5 | 17.5 | 17.5 | 17.5 | 17.5 | 17.5 |
| | Fine particles 2 (part by mass) | 17.5 | 17.5 | 17.5 | 17.5 | 17.5 | 17.5 | 17.5 |
| Transparent resin layer | Type | PP resin | PP resin | PP resin | PP resin | PP resin | PP resin | PP resin |
| | Martens hardness (N/mm²) | 30-40 | 30-40 | 30-40 | 30-40 | 30-40 | 30-40 | 30-40 |
| | Thickness (µm) | 100 | 100 | 100 | 100 | 100 | 100 | 100 |
| Base material sheet 1 | Type | PP resin A | PP resin B | PP resin B | PP resin A | PP resin B | PP resin B | PP resin A |
| | Martens hardness (N/mm²) | 30-40 | 50-60 | 50-60 | 30-40 | 50-60 | 50-60 | 30-40 |
| | Thickness (µm) | 230 | 180 | 350 | 350 | 400 | 110 | 400 |
| Base material sheet 2 (Backer layer) | Type | PP resin B | - | - | - | - | - | - |
| | Martens hardness (N/mm²) | 50-60 | - | - | - | - | - | - |
| | Thickness (µm) | 120 | - | - | - | - | - | - |
| Surface state of decorative plate (suppression of appearance of surface unevenness) | | A | A | A | B | A | B | A |
| Embossed state of decorative sheet (emboss-formilg properties) | | A | A | A | A | C | A | B |
| Embossed state of decorative plate (embossing collapse) | | A | A | A | A | A | B | A |
| Curing resistance of decorative sheet | | A | A | A | A | C | A | B |
| Static pressure load resistance (gloss appearance under static pressure conditions) | | A | A | A | B | A | B | A |
| Micro-scratch test | Gloss test (A test) | A | A | A | A | A | A | A |
| | Scratch test (B test) | A+ | A+ | A+ | A | A | A | A |

| | | | | | | | | |
|---|---|---|---|---|---|---|---|---|
| * Reference Example | | | | | | | | |

**Table 6**

| | | Example 1 | Example 13 | Example 14 |
|---|---|---|---|---|
| Embossed shape | Embossed pattern | Wood-grain pattern 1 | Wood-grain pattern 1 | Wood-grain pattern 1 |
| | Ten-point average roughness Rzⱼⱼₛ | 71 | 71 | 71 |
| Surface-protecting layer | Thickness (µm) | 15 | 15 | 15 |
| | Fine particles 1 (part by mass) | 30 | 30 | 30 |
| | Fine particles 2 (part by mass) | 5 | 5 | 5 |
| | Occupancy area ratio of surface-protecting layer (%) | 100 | 100 | 30 |
| | Gloss value (60°) G_{P} | 13 | 13 | 13 |
| Gloss-adjusting layer | Thickness (µm) | - | 2 | 2 |
| | Occupancy area ratio of gloss-adjusting laver (%) | - | 50 | 100 |
| | Gloss value (60°) G_{A} | - | 2 | 2 |
| Transparent resin layer | Type of resin | PP resin | PP resin | PP resin |
| | Martens hardness (N/mm²) | 30-40 | 30-40 | 30-40 |
| | Thickness (µm) | 100 | 100 | 100 |
| Base material sheet 1 | Type of resin | PP resin A | PP resin A | PP resin A |
| | Martens hardness (N/mm²) | 30-40 | 30-40 | 30-40 |
| | Thickness (µm) | 60 | 60 | 60 |
| Base material sheet 2 (Backer layer) | Type of resin | PP resin B | PP resin B | PP resin B |
| | Martens hardness (N/mm²) | 50-60 | 50-60 | 50-60 |
| | Thickness (µm) | 120 | 120 | 120 |
| Surface state of decorative plate - 2 | | B | A+ | A |
| Designability | | B | A | A+ |

**Table 7**

| | | Example 15 | Example 16 |
|---|---|---|---|
| Embossed shape | Embossed pattern | Wood-grain pattern 1 | Wood-grain pattern 1 |
| | Ten-point average roughness Rzⱼᵢₛ (µm) | 71 | 71 |
| Surface-protecting layer | Thickness (µm) | 7 | 7 |
| | Fine particles 3 (part by mass) | 7.5 | 17.5 |
| | Fine particles 4 (part by mass) | 7.5 | 17.5 |
| Transparent resin layer | Type | PP resin | PP resin |
| | Martens hardness (N/mm²) | 30-40 | 30-40 |
| | Thickness (µm) | 100 | 100 |
| Base material sheet 1 | Type | PP resin A | PP resin A |
| | Martens hardness (N/mm²) | 30-40 | 30-40 |
| | Thickness (µm) | 60 | 60 |
| Base material sheet 2 (Backer layer) | Type | PP resin B | PP resin B |
| | Martens hardness (N/mm²) | 50-60 | 50-60 |
| | Thickness (µm) | 120 | 120 |
| Surface state of decorative plate (suppression of appearance of surface unevenness) | | A | A |
| Embossed state of decorative sheet (emboss-forming properties) | | A | A |
| Embossed state of decorative plate (embossing collapse) | | A | A |
| Curling resistance of decorative sheet | | A | A |
| Static pressure load resistance (gloss appearance under static pressure conditions) | | A | A |
| Micro-scratch test | Gloss test (A test) | A | A |
| | Scratch test (B test) | A+ | A+ |
| Hoffman scratch test | | B | B |

**Table 8**

| | | Example 17 | Example 18 |
|---|---|---|---|
| Embossed shape | Embossed pattern | Wood-grain pattern 1 | Wood-grain pattern 1 |
| | Ten-point average roughness Rzⱼᵢₛ (µm) | 71 | 71 |
| Surface-protecting layer | Thickness (µm) | 30 | 30 |
| | Fine particles 5 (part by mass) | 7.5 | 17.5 |
| | Fine particles 6 (part by mass) | 7.5 | 17.5 |
| Transparent resin layer | Type | PP resin | PP resin |
| | Martens hardness (N/mm²) | 30-40 | 30-40 |
| | Thickness (µm) | 1 00 | 100 |
| Base material sheet 1 | Type | PP resin A | PP resin A |
| | Martens hardness (N/mm²) | 30-40 | 30-40 |
| | Thickness (µm) | 60 | 60 |
| Base material sheet 2 (Backer layer) | Type | PP resin B | PP resin B |
| | Martens hardness (N/mm²) | 50-60 | 50-60 |
| | Thickness (µm) | 120 | 120 |
| Surface state of decorative plate (suppression of appearance of surface unevenness) | | A | A |
| Embossed state of decorative sheet (emboss-forming properties) | | A | A |
| Embossed state of decorative plate (embossing collapse) | | A | A |
| Curling resistance of decorative sheet | | A | A |
| Static pressure load resistance (gloss appearance under static pressure conditions) | | A | A |
| Micro-scratch test | Gloss test (A test) | A | A |
| | Scratch test (B test) | A+ | A+ |
| Hoffman scratch test | | A+ | A+ |

**Table 9**

| | | Example 9 | Example 19 | Example 20 | Example 21 |
|---|---|---|---|---|---|
| Embossed shape | Embossed pattern | Wood-grain pattern 2 | Wood-grain pattern 3 | Wood-grain pattern 4 | Wood-grain pattern 5 |
| | Ten-point average roughness Rzⱼᵢₛ (µm) | 60 | 90 | 120 | 160 |
| Surface-protecting layer | Thickness (µm) | 15 | 15 | 15 | 15 |
| | Fine particles 1 (part by mass) | 17.5 | 17.5 | 17.5 | 17.5 |
| | Fine particles 2 (part by mass) | 17.5 | 17.5 | 17.5 | 17.5 |
| Transparent resin layer | Type | PP resin | PP resin | PP resin | PP resin |
| | Martens hardness (N/mm²) | 30-40 | 30-40 | 30-40 | 30-40 |
| | Thickness (µm) | 100 | 100 | 100 | 100 |
| Base material sheet 1 | Type | PP resin A | PP resin A | PP resin A | PP resin A |
| | Martens hardness (N/mm²) | 30-40 | 30-40 | 30-40 | 30-40 |
| | Thickness (µm) | 60 | 60 | 60 | 60 |
| Base material sheet 2 (Backer layer) | Type | PP resin B | PP resin B | PP resin B | PP resin B |
| | Martens hardness (N/mm²) | 50-60 | 50-60 | 50-60 | 50-60 |
| | Thickness (µm) | 120 | 120 | 120 | 120 |
| Surface state of decorative plate (suppression of appearance of surface unevenness) | | A | A | A+ | A+ |
| Embossed state of decorative sheet (emboss-forming properties) | | A | A | A | A |
| Embossed state of decorative plate (embossing collapse) | | B | A | A | A |
| Curling resistance of decorative sheet | | A | A | A | A |
| Static pressure load resistance (gloss appearance under static pressure conditions) | | A | A | A | A |
| Micro-scratch test | Gloss test (A test) | A | A | A | A |
| | Scratch test (B test) | A+ | A+ | A+ | A+ |
| Hoffman scratch test | | A+ | A | A | A |

**Table 10**

| Type | Particle size |
|---|---|
| Fine particles 1 | 6-8 µm |
| Fine particles 2 | 18-20 µm |
| Fine particles 3 | 3-4 µm |
| Fine particles 4 | 8-10 µm |
| Fine particles 5 | 10-12 µm |
| Fine particles 6 | 31-33 µm |

**Table 11**

| Embossing plate | Rz(µm) |
|---|---|
| Wood-grain pattern 1 | 71 |
| Wood-grain pattern 2 | 60 |
| Wood-grain pattern 3 | 90 |
| Wood-grain pattern 4 | 120 |
| Wood-grain pattern 5 | 160 |

As is clear from the above results, Examples 1 to 12 satisfied all of the requirements of the general embodiment; therefore, it was revealed that the surface state of the decorative plate (evaluation of suppression of appearance of surface unevenness of adherend), the embossed state of the decorative sheet (evaluation of emboss-forming properties), the embossed state of the decorative plate (evaluation of embossing collapse), the curling resistance of the decorative sheet, static pressure load resistance (evaluation of gloss appearance under static pressure load conditions), the gloss test (A test), and the scratch test (B test) all showed excellent results; when the decorative sheet was bonded to an adherend, such as a chipboard, to form a decorative plate, the appearance of unevenness of the adherend on the surface of the decorative plate was suppressed; and scratch resistance was excellent even under service conditions, such as walking with shoes on, and thus gloss appearance was suppressed. Further, in Examples 1 to 12, emboss-forming properties were excellent; embossing collapse was suppressed when the decorative sheet was bonded to an adherend; and curling resistance was excellent. It was revealed that the obtained decorative sheets and decorative plates were suitable for use as floor decorative sheets and floor decorative materials that are used for floor, particularly under service conditions, such as walking with shoes on.

Moreover, in Examples 1, 13, and 14, it was revealed that when the decorative sheet was bonded to an adherend having a greater surface roughness, the appearance of unevenness of the adherend on the surface of the decorative plate was suppressed, and that designability was excellent.

Furthermore, in Examples 9 and 15 to 21, the results of the Hoffman scratch test were B or higher. It was revealed that, in addition to the above performance, the light-load scratch resistance was also excellent.

Conversely, in Comparative Example 1, because the surface-protecting layer did not contain the fine particles B, which had a particle size greater than the thickness of the surface-protecting layer, the results of the gloss test (A test) and the scratch test (B test) were inferior. Further, because the surface-protecting layer contained a large amount (40 parts by mass) of the fine particles A, which had a particle size equal to or less than the thickness of the surface-protecting layer, the fine particles A projecting from the surface of the surface-protecting layer were pressed into the surface-protecting layer by static pressure load, and gloss appearance occurred. Thus, the static pressure load resistance was inferior.

In Comparative Example 2, due to the high total content of the fine particles A and B, gloss appearance occurring because the fine particles A projecting from the surface of the surface-protecting layer were pressed into the surface-protecting layer by the static pressure load was noticeable. Further, gloss appearance occurring because the fine particles B projecting from the surface of the surface-protecting layer were shaved was noticeable. The static pressure load resistance was inferior, and the results of the gloss test (A test) were inferior.

In Comparative Example 3, because the surface-protecting layer contained a large amount of the fine particles B, which had a particle size greater than the thickness of the surface-protecting layer, and did not contain the fine particles A, which had a particle size equal to or less than the thickness of the surface-protecting layer, the fine particles B projecting from the surface of the surface-protecting layer were shaved. Thus, gloss appearance was noticeable, the static pressure load resistance was inferior, and the results of the gloss test (A test) and the scratch test (B test) were inferior.

In Comparative Examples 4 and 6, because the surface-protecting layer did not contain the fine particles B, which had a particle size greater than the thickness of the surface-protecting layer, the scratch resistance was inferior, and the results of the scratch test (B test) were inferior.

In Comparative Examples 5 and 7, because the surface-protecting layer did not contain the fine particles A, which had a particle size equal to or less than the thickness of the surface-protecting layer, the fine particles B projecting from the surface of the surface-protecting layer were shaved. Thus, gloss appearance was noticeable, the static pressure load resistance was inferior, and the results of the gloss test (A test) were inferior.

In Comparative Examples 8 to 10, because the total content of the fine particles A and B was low, the scratch resistance and the matte effect by the fine particles were not sufficiently exhibited, the static pressure load resistance was inferior, and the results of the gloss test (A test) and the scratch test (B test) were inferior.

In Comparative Example 11, because the thickness of the surface-protecting layer was thin, the scratch resistance was inferior, and the results of the scratch test (B test) were inferior.

In Comparative Example 12, because the thickness of the surface-protecting layer was thick, it was difficult to form an embossed shape on the decorative sheet, and the embossed state of the decorative sheet was evaluated as inferior.

In Comparative Example 13, because the Martens hardness of the base material sheet was low, surface unevenness of the adherend appeared on the surface of the decorative sheet, and the surface state of the decorative plate was evaluated as inferior.

In Comparative Example 14, because the thickness of the base material sheet was thick, it was difficult to form an embossed shape on the decorative sheet, and the embossed state of the decorative sheet was evaluated as inferior. Moreover, because the thickness of the base material sheet was thick, curliness tended to occur in the decorative sheet, and the curling resistance was evaluated as inferior.

In Comparative Example 15, because the base material sheet was thin, surface unevenness of the adherend appeared on the surface of the decorative sheet, and the surface state of the decorative plate was evaluated as inferior.

In Comparative Example 16, because the thickness of the base material sheet was thick, and the Martens hardness of the base material sheet was low, it was difficult to form an embossed shape on the decorative sheet, and the embossed state of the decorative sheet was evaluated as inferior. Further, curliness tended to occur in the decorative sheet, and the curling resistance was evaluated as inferior.

### Examples of the present invention

### Example 22

A 2-µm-thick picture pattern layer was formed by printing on the front surface of a base material sheet comprising a 60-µm-thick colored polypropylene (PP) film (Artply, produced by Mitsubishi Plastics Industries, Ltd.) . A 2-µm-thick transparent adhesive layer comprising a urethane-based resin (Seika Bond E-263/C-75N, produced by Dainichiseika Color & Chemicals Mfg. Co., Ltd.) was formed on the picture pattern layer. A 100-(µm-thick transparent polypropylene (PP) resin sheet (Novatec PP, produced by Japan Polypropylene Corporation) was laminated on the adhesive layer by an extrusion lamination method, thereby forming a transparent resin layer.

Subsequently, the surface of the transparent resin layer was subjected to a corona discharge treatment, and then coated with a two-component curable urethane-based resin, thereby forming a primer layer (surface-protecting layer-forming primer layer; thickness: 2 µm).

The front surface of the primer layer was coated with a surface-protecting layer-forming resin composition comprising a urethane acrylate-based electron beam-curable resin (EB resin) by a gravure coating method so that the thickness (layer thickness) after curing was 15 µm. Then, the electron beam-curable resin was cured by irradiation with an electron beam using an electron beam irradiation device in an environment with an oxygen concentration of 200 ppm or less at an acceleration voltage of 175 KeV with a dose of 5 Mrad. Thus, a surface-protecting layer was formed. The proportion of the electron beam-curable resin is as follows.
- Bifunctional urethane acrylate (Tg = 25 (°C), molecular weight: 1,500): 80 parts by mass
- Hexafunctional urethane acrylate (Tg = 200 (°C) or more, molecular weight: 1,500): 20 parts by mass

Further, the surface-protecting layer side was heated with a non-contact type infrared heater to thereby soften the base material sheet and the transparent resin layer, and embossing was immediately conducted (specifically by hot-pressing an embossing plate having a wood-grain pattern, described later) to form an embossed pattern (wood-grain pattern (wood-grain pattern 6)).

Next, a resin layer made of homopolypropylene was laminated on the back surface of the base material sheet by a melt-extrusion lamination method to thereby form a backer layer. (Specifically, a backer layer was formed and laminated on the back surface of the base material sheet by extrusion molding of a backer layer-forming resin composition comprising homopolypropylene in a molten state.)

Further, the back surface of the backer layer was subjected to a corona discharge treatment, and then a back-surface primer layer (thickness: 2 µm) was formed.

A decorative sheet of Example 22 was obtained in this manner.

### - Physical properties of the decorative sheet of Example 22

The ten-point average roughness (ten-point average roughness of the embossed shape by the embossed pattern) Rzⱼᵢₛ of the surface of the decorative sheet was 71 µm, the thickness of the backer layer was 120 µm, and the Martens hardness of the backer layer was 50 to 60 N/mm². The measurement distance in the measurement of Rzⱼᵢₛ was 2 cm. The Martens hardness was measured in the cross-sectional direction of the backer layer. Moreover, when the gloss value (incident angle: 60°) of the surface-protecting layer was measured by using PG-3D (produced by Nippon Denshoku Industries Co., Ltd.), the gloss value (G_{P}) was 13.

### Example 23

First, a base material sheet, a picture pattern layer, an adhesive layer, a transparent resin layer, and a primer layer were formed. Each layer was formed in the same manner as in Example 22.

Next, a patterned gloss-adjusting layer was formed on the front surface of the primer layer so that the ratio of the area of the gloss-adjusting layer per cm² of the surface of the decorative sheet on the surface-protecting layer side was 50% (the occupancy area ratio of the gloss-adjusting layer when viewed from the front surface of the finally produced decorative sheet was 50%). The gloss-adjusting layer was formed by applying matte ink (a printing ink composition containing 10 parts by mass of silica particles based on 100 parts by mass of polyester urethane-based printing ink having a number average molecular weight of 3,000 and a glass transition temperature (Tg) of - 62.8°C) in a wood grain vessel pattern by a gravure printing method so that the thickness of the gloss-adjusting layer after drying was 2 µm.

Then, a surface-protecting layer was formed on the entire surface of the gloss-adjusting layer, and an embossed pattern was further formed on the surface-protecting layer side. The surface-protecting layer and the embossed pattern were each formed in the same manner as in Example 22.

Subsequently, a backer layer was formed on the back surface of the base material sheet, and a back-surface primer layer was further formed on the back surface of the backer layer. The backer layer and the back-surface primer layer were each formed in the same manner as in Example 22.

A decorative sheet of Example 23 was obtained in this manner.

The gloss value (G_{A}) measured when the gloss-adjusting layer was irradiated with light at an incident angle of 60° before applying the surface-protecting layer-forming resin composition was 2. Separately from the above decorative sheet, a decorative sheet that was the same as the decorative sheet of Example 23, except that a gloss-adjusting layer was not formed, was prepared for measuring the gloss value of the surface-protecting layer. The gloss value (G_{P}) measured when the surface-protecting layer of the decorative sheet for measurement was irradiated with light at an incident angle of 60° was 13. The gloss values (incident angle: 60°) of the gloss-adjusting layer and the surface-protecting layer in the decorative sheet of Example 23 were determined by the above respective gloss values. The gloss values (incident angle: 60°) were measured by using PG-3D (produced by Nippon Denshoku Industries Co., Ltd.).

### Example 24

First, a base material sheet, a picture pattern layer, an adhesive layer, a transparent resin layer, and a primer layer were formed. Each layer was formed in the same manner as in Example 22.

Then, a gloss-adjusting layer (thickness after drying: 2 µm) was formed on the entire front surface of the primer layer. In the formation of the gloss-adjusting layer, the same ink as the matte ink used in Example 23 was used.

Next, a patterned surface-protecting layer was formed on the gloss-adjusting layer so that the ratio of the area of the surface-protecting per cm² of the surface of the decorative sheet on the surface-protecting layer side was 30% (the ratio of the area of the region in which the gloss-adjusting layer was exposed (the exposure area ratio of the less-gloss layer) was 70%). In the formation of the surface-protecting layer, the same resin composition as the surface-protecting layer-forming resin composition used in Example 22 was used. Curing of the electron beam-curable resin was also performed in the same manner as in Example 22.

Subsequently, an embossed pattern was formed on the surface-protecting layer side. The embossed pattern was formed in the same manner as in Example 22.

Then, a backer layer was formed on the back surface of the base material sheet, and a back-surface primer layer was further formed on the back surface of the backer layer. The backer layer and the back-surface primer layer were each formed in the same manner as in Example 22.

A decorative sheet of Example 24 was obtained in this manner.

The gloss value (G_{A}) measured when the gloss-adjusting layer was irradiated with light at an incident angle of 60° before applying the surface-protecting layer-forming resin composition was 2. Separately from the above decorative sheet, a decorative sheet that was the same as the decorative sheet of Example 24, except that a gloss-adjusting layer was not formed, was prepared for measuring the gloss value of the surface-protecting layer. The gloss value (G_{P}) measured when the surface-protecting layer of the decorative sheet for measurement was irradiated with light at an incident angle of 60° was 13. The gloss values (incident angle: 60°) of the gloss-adjusting layer and the surface-protecting layer in the decorative sheet of Example 24 were determined by the above respective gloss values. The gloss values (incident angle: 60°) were measured by using PG-3D (produced by Nippon Denshoku Industries Co., Ltd.).

### Examples 25 to 34

(1) The resin component constituting the backer layer and/or (2) the thickness of the backer layer were suitably changed as shown in Tables 13 and 14. Moreover, (3) the embossed pattern of the embossed shape was suitably changed to wood grain patterns 6 to 10 shown in Table 15, as shown in Tables 13 and 14. Further, (4) the Martens hardness of the backer layer was suitably changed as shown in Tables 13 and 14. Decorative sheets of Examples 25 to 34 were prepared in the same manner as in Example 22, except for the above conditions. The Martens hardness of the backer layer can be changed by changing (1) the resin component constituting the backer layer. In Tables 12 to 14, resins A, C, and D are homopolypropylene, and resin B is polyethylene terephthalate (PET).

### Comparative Examples 17 to 20

Decorative sheets of Comparative Example 17 to 20 were obtained in the same manner as in Example 22, except that (1) the resin component constituting the backer layer and/or (2) the thickness of the backer layer were suitably changed. The Martens hardness of the backer layer can be changed by changing (1) the resin component constituting the backer layer.

### Evaluation Method 1: Surface state of decorative plate - 1 (evaluation of suppression of appearance of surface unevenness of adherend)

An aqueous emulsion adhesive (Rikabond BA-10L (main agent): BA-11B (curing agent), produced by Chirika Co., Ltd.) was applied to a corkboard in an amount of 6 to 7 *g*/*shakkaku,* and a decorative sheet was laminated thereon, followed by curing at room temperature for three days, thereby producing a decorative plate. The surface state of the decorative plate was visually observed, and evaluated according to the following evaluation criteria. In the following evaluation criteria, an evaluation of A or higher indicates that the surface state is unproblematic in practical use.
A: Unevenness of the adherend does not appear.
B: Unevenness of the adherend slightly appears.
C: Unevenness of the adherend clearly appears.

### Evaluation Method 2: Embossed state of decorative sheet (evaluation of emboss-forming properties)

The state of the embossed pattern of the decorative sheet was visually observed, and evaluated according to the following evaluation criteria. In the following evaluation criteria, an evaluation of A or higher indicates that the embossed state is unproblematic in practical use.
A: The embossed pattern clearly remains.
B: The embossed pattern slightly disappears.
C: The embossed pattern almost disappears.

### Evaluation Method 3: Embossed state of decorative plate (evaluation of embossing collapse)

The embossed state of the decorative plate, i.e., embossing collapse after lamination of the decorative sheet on an adherend, was evaluated. Specifically, an aqueous emulsion adhesive (Rikabond BA-10L (main agent): BA-11B (curing agent), produced by Chirika Co., Ltd.) was applied to a particle board in an amount of 6 to 7 *g*/*shakkaku,* and a decorative sheet was laminated thereon, followed by curing at room temperature for three days, thereby producing a decorative plate. The embossed state of the decorative plate was visually observed, and evaluated according to the following evaluation criteria. In the following evaluation criteria, an evaluation of B or higher indicates that the embossed state is unproblematic in practical use.
A: The embossed pattern is not collapsed.
B: The embossed pattern is slightly collapsed.
C: The embossed pattern is almost collapsed.

### Evaluation Method 4: Curling resistance of decorative sheet

The decorative sheet was wound around a paper tube (diameter: 3 inches (= 76.2 mm)), and allowed to stand at room temperature for one week. The decorative sheet was unwound, and the state of curling was visually observed and evaluated according to the following evaluation criteria. In the following evaluation criteria, an evaluation of A or higher indicates that the curling resistance is unproblematic in practical use.
A: The decorative sheet is hardly curled.
B: The decorative sheet is slightly curled.
C: The decorative sheet is clearly curled.

### Evaluation Method 5: Rolled state of decorative sheet (evaluation of roll shape and cracks on surface of decorative sheet)

A sheet (100 m) having a width of 3 *shaku* (Japanese unit of measurement) (= 909.09 mm) was wound around a paper tube (diameter: 3 inches (= 76.2 mm)) to produce a rolled decorative sheet. The rolled decorative sheet was visually observed, and evaluated according to the following evaluation criteria. In the following evaluation criteria, an evaluation of B or higher indicates unproblematic practical use.
A: The roll shape is an undistorted circle, and no cracks are found on the surface of the decorative sheet.
B: The roll shape is a slightly distorted circle, and no cracks are found on the surface of the decorative sheet.
C: (1) The roll shape is a distorted circle; (2) even though the roll shape is an undistorted circle, cracks are found on the surface of the decorative sheet; or (3) the decorative sheet originally cannot be wound in a roll shape.

### Evaluation _Method 6: Surface state of decorative plate - 2 (evaluation of suppression of appearance of surface unevenness of adherend having greater surface roughness)

An adherend having a surface roughness greater than that of a corkboard (an adherend having a surface roughness Rz at least two times greater than that of a general adherend) was prepared. Next, an aqueous emulsion adhesive (Rikabond BA-10L (main agent): BA-11B (curing agent), produced by Chirika Co., Ltd.) was applied to the adherend in an amount of 6 to 7 *g*/*shakkaku,* and the decorative sheets of Examples 22 to 24 were each laminated thereon, followed by curing at room temperature for three days, thereby producing decorative plates. The surface state of each decorative plate was visually observed, and evaluated according to the following evaluation criteria. In the following evaluation criteria, an evaluation of B or higher indicates that the surface state is unproblematic in practical use.
A+: Unevenness of the adherend does not appear.
A: Unevenness of the adherend barely appears.
B: Unevenness of the adherend slightly appears.
C: Unevenness of the adherend appears more clearly than evaluation B above.

### Evaluation Method 7: Evaluation of designability of decorative sheet

First, decorative plates were produced in the same manner as in Evaluation Method 6 described above. Then, the appearance of each decorative plate was observed by 20 adult men and women, and whether wooden texture was expressed was evaluated according to the following evaluation criteria. In the following evaluation criteria, an evaluation of B or higher indicates that the surface state is unproblematic in practical use.
A+: 90% or more of adult men and women determined that wooden texture was expressed.
A: 70% or more of adult men and women determined that wooden texture was expressed.
B: 50% or more of adult men and women determined that wooden texture was expressed.
C: Less than 50% of adult men and women determined that wooden texture was expressed.

The following Tables 12 to 14 show the results found for the examples and comparative examples of the invention.

**Table 12**

| | | Example 22 | Example 23 | Example 24 |
|---|---|---|---|---|
| Surface-protecting layer | Thickness (µm) | 15 | 15 | 15 |
| | Occupancy area ratio of surface-protecting layer (%) | 100 | 100 | 30 |
| | Gloss value (60°) G_{P} | 13 | 13 | 13 |
| Gloss-adjusting layer | Thickness (µm) | - | 2 | 2 |
| | Occupancy area ratio of gloss-adjusting layer (%) | - | 50 | 100 |
| | Gloss value (60°) G_{A} | - | 2 | 2 |
| Transparent resin layer | Type of resin | PP resin | PP resin | PP resin |
| | Thickness (µm) | 100 | 100 | 100 |
| Base material sheet | Type of resin | PP resin | PP resin | PP resin |
| | Thickness (µm) | 60 | 60 | 60 |
| Backer layer | Type of resin | Resin A | Resin A | Resin A |
| | Martens hardness (N/mm²) | 50-60 | 50-60 | 50-60 |
| | Thickness (µm) | 120 | 120 | 120 |
| Embossed shape | Embossed pattern | Wood-grain pattern 6 | Wood-grain pattern 6 | Wood-grain pattern 6 |
| | Ten-point average roughness Rzⱼᵢₛ (µm) | 71 | 71 | 71 |
| Surface state of decorative plate - 2 | | B | A+ | A |
| Designability | | B | A | A+ |

**Table 13**

| | | Example 22 | Example 25 | Example 26 | Example 27 | Example 28 | Example 29 | Example 30 | Example 31 | Example 32 |
|---|---|---|---|---|---|---|---|---|---|---|
| Surface-protecting layer | Thickness (µm) | 15 | 15 | 15 | 15 | 15 | 15 | 15 | 15 | 15 |
| Transparent resin layer | Type of resin component | PP resin | PP resin | PP resin | PP resin | PP resin | PP resin | PP resin | PP resin | PP resin |
| | Thickness (µm) | 100 | 100 | 100 | 100 | 100 | 100 | 100 | 100 | 100 |
| Base material sheet | Type of resin component | PP resin | PP resin | PP resin | PP resin | PP resin | PP resin | PP resin | PP resin | PP resin |
| | Thickness (µm) | 60 | 60 | 60 | 60 | 60 | 60 | 60 | 60 | 60 |
| Backer layer | Type of resin component | Resin A | Resin A | Resin A | Resin A | Resin A | Resin A | Resin A | Resin A | Resin A |
| | Martens hardness (N/mm²) | 50-60 | 50-60 | 50-60 | 50-60 | 50-60 | 50-60 | 50-60 | 50-60 | 50-60 |
| | Thickness (µm) | 120 | 135 | 170 | 200 | 250 | 120 | 120 | 120 | 120 |
| Embossed shape | Embossed pattern | Wood-grain pattern 6 | Wood-grain pattern 6 | Wood-grain pattern 6 | Wood-grain pattern 6 | Wood-grain pattern 6 | Wood-grain pattern 7 | Wood-grain pattern 8 | Wood-grain pattern 9 | Wood-grain pattern 10 |
| | Ten-point average roughness Rzⱼᵢₛ (µm) | 71 | 71 | 71 | 71 | 71 | 40 | 90 | 120 | 160 |
| Surface state of decorative plate (suppression of appearance of surface unevenness) | | A | A | A | A | A | A | A | A | A |
| Embossed state of decorative sheet (emboss-forming properties) | | A | A | A | A | B | A | A | A | A |
| Embossed state of decorative plate (embossing collapse) | | A | A | A | A | A | A | A | A | B |
| Curling resistance of decorative sheet | | A | A+ | A | B | B | A | A | A | A |
| Rolled state of decorative sheet | | A | A | A | A | A | A | A | A | A |

**Table 14**

| | | Comparative Example 17 | Comparative Example 18 | Comparative Example 19 | Comparative Example 20 | Example 33 | Example 34 |
|---|---|---|---|---|---|---|---|
| Surface-protecting layer | Thickness (µm) | 15 | 15 | 15 | 15 | 15 | 15 |
| Transparent resin layer | Type of resin component | PP resin | PP resin | PP resin | PP resin | PP resin | PP resin |
| | Thickness (µm) | 100 | 100 | 100 | 100 | 100 | 100 |
| Base material sheet | Type of resin component | PP resin | PP resin | PP resin | PP resin | PP resin | PP resin |
| | Thickness (µm) | 60 | 60 | 60 | 60 | 60 | 60 |
| Backer layer | Type of resin component | Resin A | Resin A | Resin B | Resin B | Resin C | Resin D |
| | Martens hardness (N/mm²) | 50-60 | 50-60 | 85-100 | 85-100 | 60-70 | 70-80 |
| | Thickness (µm) | 100 | 300 | 100 | 300 | 120 | 120 |
| Embossed shape | Embossed pattern | Wood-grain pattern 6 | Wood-grain pattern 6 | Wood-grain pattern 6 | Wood-grain pattern 6 | Wood-grain pattern 6 | Wood-grain pattern 6 |
| | Ten-point average roughness Rzⱼᵢₛ (µm) | 71 | 71 | 71 | 71 | 71 | 71 |
| Surface state of decorative plate (suppression of appearance of surface unevenness) | | C | A | B | A | A | B |
| Embossed state of decorative sheet (emboss-forming properties) | | A | C | A | C | A | A |
| Embossed state of decorative plate (embossing collapse) | | C | A | B | A | A | A |
| Curling resistance of decorative sheet | | A | C | A | C | A | A |
| Rolled state of decorative sheet | | A | B | C | C | A | B |

**Table 15**

| Embossing plate | Rz (µm) |
|---|---|
| Wood-grain pattern 6 | 71 |
| Wood-grain pattern 7 | 40 |
| Wood-grain pattern 8 | 90 |
| Wood-grain pattern 9 | 120 |
| Wood-grain pattern 10 | 160 |

### Reference Signs List

- 1.: Decorative sheet
- 2.: Base material sheet
- 3.: Picture pattern layer
- 4.: Transparent resin layer
- 5.: Surface-protecting layer
- 6.: Fine particles A
- 7.: Fine particles B
- 8.: Gloss-adjusting layer
- 9.: Backer layer

## Claims

1. A decorative sheet (1) for floor materials comprising a base material sheet (2), and at least a transparent resin layer (4) and a surface-protecting layer (5) sequentially laminated on the base material sheet (2), and the decorative sheet (1) comprising at least a backer layer (9) laminated on a back surface of the base material sheet (2), wherein
(1) the surface of the decorative sheet (1) has a ten-point average roughness Rzⱼᵢₛ, measured according to JIS B0601:2001, of 40 µm or more;
(2) the surface-protecting layer (5) contains an ionizing radiation-curable resin;
(3) the base material sheet (2), the transparent resin layer (4), and the backer layer (9) each contain a non-halogen-based thermoplastic resin;
(4) the backer layer (9) has a thickness of 120 to 250 µm;
(5) the backer layer (9) has a Martens hardness, measured according to the method given in the description, of 50 to 80 N/mm²; and
(6) the backer layer (9) is laminated by extrusion molding of a backer layer-forming resin composition in a molten state on the back surface of the base material sheet (2).

2. The decorative sheet (1) according to claim 1, wherein a gloss-adjusting layer (8) is formed on the transparent resin layer (4), and the gloss-adjusting layer (8) is formed adjacent to the surface-protecting layer (5); the gloss value (GA) of the gloss-adjusting layer (8) and the gloss value (GP) of the surface-protecting layer (5) being different, whereby gloss values are measured according to JIS Z8741.

3. A rolled product obtained by winding the decorative sheet (1) according to claim 1 or 2 in a roll shape.

4. A decorative plate in which the decorative sheet (1) according to claim 1 or 2, or a decorative sheet (1) obtained by unwinding the rolled product according to claim 3, is laminated on an adherend.

5. A process for producing a decorative sheet (1) for floor materials according to claim 1 comprising a base material sheet (2), and at least a transparent resin layer (4) and a surface-protecting layer (5) sequentially laminated on the base material sheet (2), and the decorative sheet (1) comprising at least a backer layer (9) laminated on a back surface of the base material sheet (2), the process sequentially comprising the following steps 1 to 3:
(i) step 1 of obtaining a laminated sheet sequentially having at least a transparent resin layer (4) and a surface-protecting layer (5) on a base material sheet (2),
the surface-protecting layer (5) containing an ionizing radiation-curable resin, and
the base material sheet (2) and the transparent resin layer (4) each containing a non-halogen-based thermoplastic resin;
(ii) step 2 of performing embossing from the surface-protecting layer (5) of the laminated sheet so that the surface of the laminated sheet has a ten-point average roughness Rzⱼᵢₛ of 40 µm or more; and
(iii) step 3 of laminating a backer layer (9) by extrusion molding of a backer layer-forming resin composition in a molten state on the back surface of the base material sheet (2),
the backer layer (9) containing a non-halogen-based thermoplastic resin,
the backer layer (9) having a thickness of 120 to 250 µm, and
the backer layer (9) having a Martens hardness of 50 to 80 N/mm².

6. A process for producing a decorative sheet (1) for floor materials according to claim 1 comprising a base material sheet (2), and at least a transparent resin layer (4) and a surface-protecting layer (5) sequentially laminated on the base material sheet (2), and the decorative sheet (1) comprising at least a backer layer (9) laminated on a back surface of the base material sheet (2), the process sequentially comprising the following steps 1 to 4:
(i) step 1 of obtaining a laminate having at least a transparent resin layer (4) on a base material sheet (2),
the base material sheet (2) and the transparent resin layer (4) each containing a non-halogen-based thermoplastic resin;
(ii) step 2 of performing embossing from the transparent resin layer (4) of the laminate;
(iii) step 3 of obtaining a laminated sheet having at least the transparent resin layer (4) and a surface-protecting layer (5) on the base material sheet (2) by applying a surface-protecting layer-forming resin composition containing an ionizing radiation-curable resin to the transparent resin layer (4),
the surface of the laminated sheet having a ten-point average roughness Rzⱼis of 40 µm or more; and
(iv) step 4 of laminating a backer layer (9) by extrusion molding of a backer layer-forming resin composition in a molten state on the back surface of the base material sheet (2),
the backer layer (9) containing a non-halogen-based thermoplastic resin,
the backer layer (9) having a thickness of 120 to 250 µm, and
the backer layer (9) having a Martens hardness of 50 to 80 N/mm².

7. A process for producing a decorative plate, comprising laminating a decorative sheet (1) obtained by the process for producing a decorative sheet (1) according to claim 5 or 6 on an adherend so that a surface-protecting layer (5) of the decorative sheet (1) is an outermost surface layer.

## Patentansprüche

1. Dekoratives Blatt (1) für Bodenmaterialien, umfassend ein Basismaterialblatt (2) und mindestens eine transparente Harzschicht (4) und eine Oberflächenschutzschicht (5), die nacheinander auf das Basismaterialblatt (2) laminiert sind, und wobei das dekorative Blatt (1) mindestens eine Trägerschicht (9) umfasst, die auf eine Rückseite des Basismaterialblatts (2) laminiert ist, wobei
(1) die Oberfläche des dekorativen Blatts (1) eine Zehnpunktmittelrauheit Rzⱼᵢₛ, gemessen gemäß JIS B0601:2001, von 40 µm oder mehr aufweist;
(2) die Oberflächenschutzschicht (5) ein durch ionisierende Strahlung härtbares Harz enthält;
(3) das Basismaterialblatt (2), die transparente Harzschicht (4) und die Trägerschicht (9) jeweils ein Nicht-Halogen-basiertes thermoplastisches Harz enthalten;
(4) die Trägerschicht (9) eine Dicke von 120 bis 250 µm aufweist;
(5) die Trägerschicht (9) eine Martens-Härte, gemessen gemäß dem in der Beschreibung angegebenen Verfahren, von 50 bis 80 N/mm² aufweist; und
(6) die Trägerschicht (9) durch Extrusionsformen einer Trägerschicht-bildenden Harzzusammensetzung in geschmolzenem Zustand auf die Rückseite des Basismaterialblatts (2) laminiert ist.

2. Dekorative Blatt (1) nach Anspruch 1, wobei eine Glanzeinstellschicht (8) auf der transparenten Harzschicht (4) gebildet ist und die Glanzeinstellschicht (8) angrenzend an die Oberflächenschutzschicht (5) gebildet ist; wobei der Glanzwert (GA) der Glanzeinstellschicht (8) und der Glanzwert (G_{P}) der Oberflächenschutzschicht (5) unterschiedlich sind, wobei Glanzwerte gemäß JIS Z8741 gemessen werden.

3. Gerolltes Produkt, erhalten durch Aufwickeln des dekorativen Blatts (1) nach Anspruch 1 oder 2 in eine Rollenform.

4. Dekorative Platte, bei der das dekorativen Blatt (1) nach Anspruch 1 oder 2 oder ein dekoratives Blatt (1), erhalten durch Abwickeln des gerollten Produkts nach Anspruch 3, auf ein Fügeteil laminiert ist.

5. Verfahren zur Herstellung eines dekorativen Blatts (1) für Bodenmaterialien nach Anspruch 1, umfassend ein Basismaterialblatt (2) und mindestens eine transparente Harzschicht (4) und eine Oberflächenschutzschicht (5), die nacheinander auf das Basismaterialblatt (2) laminiert sind, und wobei das dekorative Blatt (1) mindestens eine Trägerschicht (9) umfasst, die auf eine Rückseite des Basismaterialblatts (2) laminiert ist, wobei das Verfahren nacheinander die folgenden Schritte 1 bis 3 umfasst:
(i) Schritt 1 des Erhaltens eines laminierten Blatts, das nacheinander mindestens eine transparente Harzschicht (4) und eine Oberflächenschutzschicht (5) auf einem Basismaterialblatt (2) aufweist,
wobei die Oberflächenschutzschicht (5) ein durch ionisierende Strahlung härtbares Harz enthält und
das Basismaterialblatt (2) und die transparente Harzschicht (4) jeweils ein Nicht-Halogen-basiertes thermoplastisches Harz enthalten;
(ii) Schritt 2 des Durchführens des Prägens von der Oberflächenschutzschicht (5) des laminierten Blatts, sodass die Oberfläche des laminierten Blatts eine Zehnpunktmittelrauheit Rzⱼᵢₛ von 40 µm oder mehr aufweist; und
(iii) Schritt 3 des Laminierens einer Trägerschicht (9) durch Extrusionsformen einer Trägerschicht-bildenden Harzzusammensetzung in einem geschmolzenen Zustand auf die Rückseite des Basismaterialblatts (2),
wobei die Trägerschicht (9) ein Nicht-Halogen-basiertes thermoplastisches Harz enthält,
die Trägerschicht (9) eine Dicke von 120 bis 250 µm aufweist und
die Trägerschicht (9) eine Martens-Härte von 50 bis 80 N/mm² aufweist.

6. Verfahren zur Herstellung eines dekorativen Blatts (1) für Bodenmaterialien nach Anspruch 1, umfassend ein Basismaterialblatt (2) und mindestens eine transparente Harzschicht (4) und eine Oberflächenschutzschicht (5), die nacheinander auf dem Basismaterialblatt (2) laminiert sind, und wobei das dekorative Blatt (1) mindestens eine Trägerschicht (9) umfasst, die auf eine Rückseite des Basismaterialblatts (2) laminiert ist, wobei das Verfahren nacheinander die folgenden Schritte 1 bis 4 umfasst:
(i) Schritt 1 des Erhaltens eines laminierten Blatts, das mindestens eine transparente Harzschicht (4) auf einem Basismaterialblatt (2) aufweist,
wobei das Basismaterialblatt (2) und die transparente Harzschicht (4) jeweils ein Nicht-Halogen-basiertes thermoplastisches Harz enthalten;
(ii) Schritt 2 des Durchführens des Prägens von der transparenten Harzschicht (4) des Laminats;
(iii) Schritt 3 des Erhaltens eines laminierten Blatts, das mindestens die transparente Harzschicht (4) und eine Oberflächenschutzschicht (5) auf dem Basismaterialblatt (2) aufweist, durch Auftragen einer Oberflächenschutzschicht-bildenden Harzzusammensetzung, die ein durch ionisierende Strahlung härtbares Harz enthält, auf die transparente Harzschicht (4),
wobei die Oberfläche des laminierten Blatts eine Zehnpunktmittelrauheit Rzⱼis von 40 µm oder mehr aufweist; und
(iv) Schritt 4 des Laminierens einer Trägerschicht (9) durch Extrusionsformen einer Trägerschicht-bildenden Harzzusammensetzung in einem geschmolzenen Zustand auf die Rückseite des Basismaterialblatts (2),
wobei die Trägerschicht (9) ein Nicht-Halogen-basiertes thermoplastisches Harz enthält,
die Trägerschicht (9) eine Dicke von 120 bis 250 µm aufweist und
die Trägerschicht (9) eine Martens-Härte von 50 bis 80 N/mm² aufweist.

7. Verfahren zur Herstellung eines dekorativen Blatts, umfassend das Laminieren eines dekorativen Blatts (1), erhalten durch das Verfahren zur Herstellung eines dekorative Blatts (1) nach Anspruch 5 oder 6, auf ein Fügeteil, so dass eine Oberflächenschutzschicht (5) des dekorativen Blatts (1) eine äußerste Oberflächenschicht ist.

## Revendications

1. Feuille décorative (1) destinée à des matériaux de sols, qui comprend une feuille de matière de base (2), et au moins une couche de résine transparente (4) et une couche de protection de la surface (5) stratifiées de manière séquentielle sur la feuille de matière de base (2), et la feuille décorative (1) comprenant au moins une couche de renfort (9) stratifiée sur une surface arrière de la feuille de matière de base (2) ; dans laquelle :
(1) la surface de la feuille décorative (1) possède une rugosité moyenne de dix points RZⱼᵢₛ, telle qu'on la mesure conformément à la norme JIS B061:2001, de 40 µm ou plus ;
(2) la couche de protection de la surface (5) contient une résine durcissable par exposition à un rayonnement ionisant ;
(3) la feuille de matière de base (2), la couche de résine transparente (4) et la couche de renfort (9) contiennent chacune une résine thermoplastique non à base d'halogène ;
(4) la couche de renfort (9) possède une épaisseur de 120 à 250 µm ;
(5) la couche de renfort (9) possède une dureté de Martens, telle qu'on la mesure conformément au procédé indiqué dans la description, de 50 à 80 N/mm² ; et
(6) la couche de renfort (9) est stratifiée par l'intermédiaire d'un moulage par extrusion d'une composition de résine formant une couche de renfort dans un état en fusion sur la surface arrière de la feuille de matière de base (2).

2. Feuille décorative (1) selon la revendication 1, dans laquelle une couche de réglage du brillant (8) est formée sur la couche de résine transparente (4), et la couche de réglage du brillant (8) est formée en position adjacente à la couche de protection de la surface (5), la valeur de brillant (GA) de la couche de réglage du brillant (8) et la valeur de brillant (GP) de la couche de protection de la surface (5) étant différentes ; dans laquelle les valeurs de brillant sont mesurées conformément à la norme JIS Z8741.

3. Produit enroulé que l'on obtient par l'intermédiaire d'un enroulement de la feuille décorative (1) selon la revendication 1 ou 2, afin de lui conférer une configuration en forme de rouleau.

4. Plaque décorative dans laquelle on stratifie ou à laquelle on fait adhérer la feuille décorative (1) selon la revendication 1 ou 2, ou une feuille décorative (1) que l'on a obtenue par l'intermédiaire d'un déroulement du produit enroulé selon la revendication 3.

5. Procédé destiné à la fabrication d'une feuille décorative (1) pour des matériaux de sols selon la revendication 1, qui comprend une feuille de matière de base (2), et au moins une couche de résine transparente (4) et une couche de protection de la surface (5) stratifiées de manière séquentielle sur la feuille de matière de base (2), et la feuille décorative (1) comprenant au moins une couche de renfort (9) stratifiée sur une surface arrière de la feuille de matière de base (2), le procédé comprenant de manière séquentielle les étapes suivantes 1 à 3, à savoir :
(i) l'étape 1 dans laquelle on obtient une feuille stratifiée qui possède de manière séquentielle au moins une couche de résine transparente (4) et une couche de protection de la surface (5) sur une feuille de matière de base (2) ;
la feuille de projection de la surface (5) contenant une résine durcissable par exposition à un rayonnement ionisant ; et
la feuille de matière de base (2) et la couche de résine transparente (4) contenant chacune une résine thermoplastique non à base d'halogène ;
(ii) l'étape 2 dans laquelle on met en œuvre un gaufrage, à partir de la couche de protection de la surface (5), de la feuille stratifiée, d'une manière telle que la surface de la feuille stratifiée possède une rugosité moyenne de dix points Rzⱼᵢₛ de 40 µm ou plus ; et
(iii) l'étape 3 dans laquelle on stratifie une couche de renfort (9) par l'intermédiaire d'un moulage par extrusion d'une composition de résine formant une couche de renfort dans un état en fusion sur la surface arrière de la feuille de matière de base (2) ;
la couche de renfort (9) contenant une résine thermoplastique non à base d'halogène ;
la couche de renfort (9) possédant une épaisseur de 120 à 250 µm ; et
la couche de renfort (9) possédant une dureté de Martens de 50 à 80 N/mm².

6. Procédé destiné à la fabrication d'une feuille décorative (1) pour des matériaux de sols selon la revendication 1, qui comprend
une feuille de matière de base (2), et au moins une couche de résine transparente (4) et une couche de protection de la surface (5) stratifiées de manière séquentielle sur la feuille de matière de base (2),
et la feuille décorative (1) comprenant au moins une couche de renfort (9) stratifiée sur une surface arrière de la feuille de matière de base (2), le procédé comprenant de manière séquentielle les étapes suivantes 1 à 4, à savoir :
(i) l'étape 1 dans laquelle on obtient un stratifié qui possède au moins une couche de résine transparente (4) sur une feuille de matière de base (2) ;
la feuille de matière de base (2) et la couche de résine transparente (4) contenant chacune une résine thermoplastique non à base d'halogène ;
(ii) l'étape 2 dans laquelle on met en œuvre un gaufrage, à partir de la couche de résine transparente (4) du stratifié ;
(iii) l'étape 3 dans laquelle on obtient une feuille stratifiée qui possède au moins la couche de résine transparente (4) et une couche de protection de la surface (5) sur la feuille de matière de base (2) en appliquant une composition de résine formant une couche de protection de la surface qui contient une résine durcissable par exposition à un rayonnement ionisant, sur la couche de résine transparente (4) ;
la surface de la feuille stratifiée possédant une rugosité moyenne de dix points Rzⱼᵢₛ de 40 µm ou plus ; et
(iv) l'étape 4 dans laquelle on stratifie une couche de renfort (9) par l'intermédiaire d'un moulage par extrusion d'une composition de résine formant une couche de renfort dans un état en fusion sur la surface arrière de la feuille de matière de base (2) ;
la couche de renfort (9) contenant une résine thermoplastique non à base d'halogène ;
la couche de renfort (9) possédant une épaisseur de 120 à 250 µm ; et
la couche de renfort (9) possédant une dureté de Martens de 50 à 80 N/mm².

7. Procédé destiné à la fabrication d'une plaque décorative, qui comprend le fait de stratifier une feuille décorative (1) que l'on a obtenue par l'intermédiaire du procédé destiné à la fabrication d'une feuille décorative (1) selon la revendication 5 ou 6, sur un substrat, d'une manière telle qu'une couche de protection de la surface (5) de la feuille décorative (1) représente une couche de surface la plus externe.
